(19) Europäisches Patentamt
European Patent Office
Office européen des brevets

(11) **EP 3 961 154 A1**

(12) **EUROPEAN PATENT APPLICATION**

(43) Date of publication:
**02.03.2022 Bulletin 2022/09**

(21) Application number: **21192183.8**

(22) Date of filing: **19.08.2021**

(51) International Patent Classification (IPC):
***G01C 21/00*** *(2006.01)*

(52) Cooperative Patent Classification (CPC):
**G01C 21/3804**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2020 US 202063071197 P**
**15.12.2020 US 202017122452**

(71) Applicant: **HERE Global B.V.**
**5611 ZT Eindhoven (NL)**

(72) Inventors:
• **YOUNG,, Jeremy Michael**
**Chicago, 60642 (US)**
• **STENNETH,, Leon**
**Chicago, 60608 (US)**
• **BEAUREPAIRE,, Jerome**
**10715 Berlin (DE)**

(74) Representative: **Potter Clarkson**
**The Belgrave Centre**
**Talbot Street**
**Nottingham NG1 5GG (GB)**

(54) **METHOD, APPARATUS, AND COMPUTER PROGRAM PRODUCT FOR GENERATING AN AUTOMATED DRIVING CAPABILITY MAP INDEX**

(57) A method, apparatus and computer program product are provided for generating an automated driving capability map index. In this regard, autonomous level data and location data thereof associated with a vehicle traveling along a road segment is received. The autonomous level data is identified based on a change in an autonomous level for the vehicle. Furthermore, based on the location data, the autonomous level data is aggregated with other autonomous level data for one or more other vehicles associated with the road segment to generate aggregated autonomous level data for the road segment. The aggregated autonomous level data is also encoded in a database to facilitate an autonomous level prediction for vehicles associated with the road segment.

200

RECEIVE AUTONOMOUS LEVEL DATA AND LOCATION DATA THEREOF ASSOCIATED WITH A VEHICLE TRAVELING ALONG A ROAD SEGMENT, WHERE THE AUTONOMOUS LEVEL DATA IS IDENTIFIED BASED ON A CHANGE IN AN AUTONOMOUS LEVEL FOR THE VEHICLE — 202

AGGREGATE, BASED ON THE LOCATION DATA, THE AUTONOMOUS LEVEL DATA WITH OTHER AUTONOMOUS LEVEL DATA FOR ONE OR MORE OTHER VEHICLES ASSOCIATED WITH THE ROAD SEGMENT TO GENERATE AGGREGATED AUTONOMOUS LEVEL DATA FOR THE ROAD SEGMENT — 204

ENCODE THE AGGREGATED AUTONOMOUS LEVEL DATA IN A DATABASE TO FACILITATE AN AUTONOMOUS LEVEL PREDICTION FOR VEHICLES ASSOCIATED WITH THE ROAD SEGMENT — 206

**FIG. 2**

EP 3 961 154 A1

**Description**

**CROSS-REFERENCE TO RELATED APPLICATIONS**

This application claims the benefit of U.S. Provisional Patent Application No. 63/071,197, filed August 27, 2020, the entire contents of which are incorporated herein by reference.

**TECHNOLOGICAL FIELD**

An example embodiment of the present disclosure generally relates to autonomous driving for vehicles and, more particularly, to a method, apparatus and computer program product for generating an automated driving capability map index for vehicles.

**BACKGROUND**

Vehicles are being built with more and more sensors to assist with autonomous driving and/or other vehicle technologies. Generally, sensors of a vehicle related to autonomous driving capture imagery data and/or radar data to assist with the autonomous driving. For instance, image sensors and Light Distancing and Ranging (LiDAR) sensors are popular sensor types for identifying objects along a road segment and establishing the safe path of traversal for a vehicle driving autonomously. Autonomous driving capabilities of vehicles are increasing toward full automation (e.g. Level 5 autonomy) with zero human interaction. However, there are numerous challenges related to autonomous driving capabilities of vehicles.

**BRIEF SUMMARY**

A method, apparatus and computer program product are provided in order to provide an automated driving capability map index for vehicles. The method, apparatus and computer program product of an example embodiment are configured to employ changes in an autonomous level for a vehicle and/or data associated with a change in an autonomous level to determine an automated driving capability map index. As such, precision and/or confidence of autonomous driving capabilities for a vehicle can be improved. Furthermore, improved navigation of a vehicle, improved route guidance for a vehicle, improved semi-autonomous vehicle control, and/or improved fully autonomous vehicle control can be provided.

In an example embodiment, a computer-implemented method is provided for generating an automated driving capability map index. The computer-implemented method includes receiving autonomous level data and location data thereof associated with a vehicle traveling along a road segment, where the autonomous level data is identified based on a change in an autonomous level for the vehicle. The computer-implemented method also includes aggregating, based on the location data, the autonomous level data with other autonomous level data for one or more other vehicles associated with the road segment to generate aggregated autonomous level data for the road segment. The computer-implemented method also includes encoding the aggregated autonomous level data in a database to facilitate an autonomous level prediction for vehicles associated with the road segment.

In an example embodiment, the encoding the aggregated autonomous level data in the database includes mapping the aggregated autonomous level data onto a map data layer of a high-definition map to facilitate the autonomous level prediction for the vehicles.

In another example embodiment, the computer-implemented method also includes receiving first location data associated with a decision by a processor of the vehicle to initiate the change in the autonomous level for the vehicle. In this example, embodiment, the computer-implemented method also includes receiving second location data associated with execution of the change in the autonomous level by the processor the vehicle. In an example embodiment in which the receiving the location data includes receiving the first location data and receiving the second location data, the aggregating the autonomous level data with the other autonomous level data includes aggregating the autonomous level data with the other autonomous level data based on the first location data and the second location data.

In yet another example embodiment, the computer-implemented method also includes receiving first time data associated with the decision to initiate the change in the autonomous level for the vehicle. In this example, embodiment, the computer-implemented method also includes receiving second time data associated with the execution of the change in the autonomous level for the vehicle. In an example embodiment in which the first time data and the second time data is received, the aggregating the autonomous level data with the other autonomous level data includes aggregating the autonomous level data with the other autonomous level data based on the first time data and the second time data.

In an example embodiment, the computer-implemented method also includes receiving vehicle version data associated with one or more components of the vehicle that facilitate autonomous driving of the vehicle. In this example

embodiment, the aggregating the autonomous level data with the other autonomous level data includes aggregating the autonomous level data with the other autonomous level data based on the vehicle version data.

In another example embodiment, the computer-implemented method also includes receiving vehicle data associated with a vehicle type for the vehicle. In this example embodiment, the aggregating the autonomous level data with the other autonomous level data includes aggregating the autonomous level data with the other autonomous level data based on the vehicle data.

In yet another example embodiment, the computer-implemented method also includes receiving vehicle context data associated with a reason for the change in the autonomous level for the vehicle. In this example, embodiment, the aggregating the autonomous level data with the other autonomous level data includes aggregating the autonomous level data with the other autonomous level data based on the vehicle context data.

In an example embodiment, the computer-implemented method also includes determining a transition confidence value for the road segment based on a number of vehicles that are disengaged from a particular autonomous level while traveling along the road segment during an interval of time. In this example embodiment, the computer-implemented method also includes encoding the transition confidence value in the database to facilitate the autonomous level prediction for the vehicles associated with the road segment.

In an example embodiment, the determining the transition confidence value for the road segment includes determining the transition confidence value for the road segment based on temporal data associated with timing for the change in the autonomous level for the vehicle. In another example embodiment, the determining the transition confidence value for the road segment includes determining the transition confidence value for the road segment based on distance data associated with a distance between the vehicle and a particular location associated with the road segment during the change in the autonomous level for the vehicle.

In another example embodiment, an apparatus is configured to generate an automated driving capability map index. The apparatus includes processing circuitry and at least one memory including computer program code instructions that are configured to, when executed by the processing circuitry, cause the apparatus to receive autonomous level data and location data thereof associated with a vehicle traveling along a road segment, where the autonomous level data is identified based on a change in an autonomous level for the vehicle. The computer program code instructions are also configured to, when executed by the processing circuitry, cause the apparatus to aggregate, based on the location data, the autonomous level data with other autonomous level data for one or more other vehicles associated with the road segment to generate aggregated autonomous level data for the road segment. The computer program code instructions are also configured to, when executed by the processing circuitry, cause the apparatus to encode the aggregated autonomous level data in a database to facilitate an autonomous level prediction for vehicles associated with the road segment.

The computer program code instructions are further configured to, when executed by the processing circuitry, cause the apparatus of an example embodiment to map the aggregated autonomous level data onto a map data layer of a high-definition map to facilitate the autonomous level prediction for the vehicles.

The computer program code instructions are further configured to, when executed by the processing circuitry, cause the apparatus of an example embodiment to receive first location data associated with a decision by a processor of the vehicle to initiate the change in the autonomous level for the vehicle. In this example embodiment, the computer program code instructions are further configured to, when executed by the processing circuitry, cause the apparatus of an example embodiment to receive second location data associated with execution of the change in the autonomous level by the processor the vehicle. Also in this example embodiment, the computer program code instructions are further configured to, when executed by the processing circuitry, cause the apparatus of an example embodiment to aggregate the autonomous level data with the other autonomous level data based on the first location data and the second location data.

The computer program code instructions are further configured to, when executed by the processing circuitry, cause the apparatus of an example embodiment to receive first time data associated with the decision to initiate the change in the autonomous level for the vehicle. In this example embodiment, the computer program code instructions are further configured to, when executed by the processing circuitry, cause the apparatus of an example embodiment to receive second time data associated with the execution of the change in the autonomous level for the vehicle. Also in this example embodiment, the computer program code instructions are further configured to, when executed by the processing circuitry, cause the apparatus of an example embodiment to aggregate the autonomous level data with the other autonomous level data based on the first time data and the second time data.

The computer program code instructions are further configured to, when executed by the processing circuitry, cause the apparatus of an example embodiment to receive vehicle context data associated with a reason for the change in the autonomous level for the vehicle. In this example embodiment, the computer program code instructions are further configured to, when executed by the processing circuitry, cause the apparatus of an example embodiment to aggregate the autonomous level data with the other autonomous level data based on the vehicle context data.

In another example embodiment, a computer program product is provided to generate an automated driving capability map index. The computer program product includes at least one non-transitory computer readable storage medium having computer-executable program code instructions stored therein with the computer-executable program code instructions including program code instructions configured, upon execution, to receive autonomous level data and location data thereof associated with a vehicle traveling along a road segment, where the autonomous level data is identified based on a change in an autonomous level for the vehicle. The computer-executable program code instructions are also configured to aggregate, based on the location data, the autonomous level data with other autonomous level data for one or more other vehicles associated with the road segment to generate aggregated autonomous level data for the road segment. Furthermore, the computer-executable program code instructions are configured to encode the aggregated autonomous level data in a database to facilitate an autonomous level prediction for vehicles associated with the road segment.

The computer-executable program code instructions of an example embodiment are also configured to map the aggregated autonomous level data onto a map data layer of a high-definition map to facilitate the autonomous level prediction for the vehicles.

The computer-executable program code instructions of an example embodiment are also configured to receive first location data associated with a decision by a processor of the vehicle to initiate the change in the autonomous level for the vehicle. In this example embodiment, the computer-executable program code instructions of an example embodiment are also configured to receive second location data associated with execution of the change in the autonomous level by the processor the vehicle. Also in this example embodiment, the computer-executable program code instructions of an example embodiment are also configured to aggregate the autonomous level data with the other autonomous level data based on the first location data and the second location data.

The computer-executable program code instructions of an example embodiment are also configured to receive first time data associated with the decision to initiate the change in the autonomous level for the vehicle. In this example embodiment, the computer-executable program code instructions of an example embodiment are also configured to receive second time data associated with the execution of the change in the autonomous level for the vehicle. Also in this example embodiment, the computer-executable program code instructions of an example embodiment are also configured to aggregate the autonomous level data with the other autonomous level data based on the first time data and the second time data.

The computer-executable program code instructions of an example embodiment are also configured to receive vehicle context data associated with a reason for the change in the autonomous level for the vehicle. In this example embodiment, the computer-executable program code instructions of an example embodiment are also configured to aggregate the autonomous level data with the other autonomous level data based on the vehicle context data.

In another example embodiment, an apparatus is provided that includes means for receiving autonomous level data and location data thereof associated with a vehicle traveling along a road segment, where the autonomous level data is identified based on a change in an autonomous level for the vehicle. The apparatus of this example embodiment also includes means for aggregating, based on the location data, the autonomous level data with other autonomous level data for one or more other vehicles associated with the road segment to generate aggregated autonomous level data for the road segment. The apparatus of this example embodiment also includes means for encoding the aggregated autonomous level data in a database to facilitate an autonomous level prediction for vehicles associated with the road segment.

The means for encoding the aggregated autonomous level data in the database in an example embodiment comprises means for mapping the aggregated autonomous level data onto a map data layer of a high-definition map to facilitate the autonomous level prediction for the vehicles.

The means for receiving the location data comprises in an example embodiment comprises means for receiving first location data associated with a decision by a processor of the vehicle to initiate the change in the autonomous level for the vehicle. In this embodiment, the means for receiving the location data in an example embodiment further comprises means for receiving second location data associated with execution of the change in the autonomous level by the processor the vehicle. In this embodiment, the means for aggregating the autonomous level data with the other autonomous level data in an example embodiment further comprises means for aggregating the autonomous level data with the other autonomous level data based on the first location data and the second location data.

The apparatus of another example embodiment also includes means for receiving first time data associated with the decision to initiate the change in the autonomous level for the vehicle. In this example embodiment, the apparatus of another example embodiment also includes means for receiving second time data associated with the execution of the change in the autonomous level for the vehicle. In this embodiment, the means for aggregating the autonomous level data with the other autonomous level data comprises means for aggregating the autonomous level data with the other autonomous level data based on the first time data and the second time data.

The apparatus of another example embodiment also includes means for receiving vehicle version data associated with one or more components of the vehicle that facilitate autonomous driving of the vehicle. In this embodiment, the means for aggregating the autonomous level data with the other autonomous level data comprises means for aggregating the autonomous level data with the other autonomous level data based on the vehicle version data.

The apparatus of another example embodiment also includes means for receiving vehicle data associated with a vehicle type for the vehicle. In this embodiment, the means for aggregating the autonomous level data with the other autonomous level data comprises means for aggregating the autonomous level data with the other autonomous level data based on the vehicle data.

The apparatus of another example embodiment also includes means for receiving vehicle context data associated with a reason for the change in the autonomous level for the vehicle. In this embodiment, the means for aggregating the autonomous level data with the other autonomous level data comprises means for aggregating the autonomous level data with the other autonomous level data based on the vehicle context data.

The apparatus of another example embodiment also includes means for determining a transition confidence value for the road segment based on a number of vehicles that are disengaged from a particular autonomous level while traveling along the road segment during an interval of time. In this embodiment, the apparatus of another example embodiment also includes means for encoding the transition confidence value in the database to facilitate the autonomous level prediction for the vehicles associated with the road segment. Also in this embodiment, the means for determining the transition confidence value for the road segment in another example embodiment comprises means for determining the transition confidence value for the road segment based on temporal data associated with timing for the change in the autonomous level for the vehicle. Also in this embodiment, the means for determining the transition confidence value for the road segment in another example embodiment comprises means for determining the transition confidence value for the road segment based on distance data associated with a distance between the vehicle and a particular location associated with the road segment during the change in the autonomous level for the vehicle.

In another example embodiment, a computer-implemented method is provided for generating an automated driving capability map index. The computer-implemented method includes receiving autonomous level data and location data thereof associated with a vehicle traveling along a road segment, where the autonomous level data is associated with a transition of an autonomous level for the vehicle with respect to the road segment. The computer-implemented method also includes generating a data point for a map layer associated with the road segment based on the autonomous level data and the location data, where the data point indicates the transition of the autonomous level for the vehicle and a location associated with the transition of the autonomous level for the vehicle. The computer-implemented method also includes storing the data point in a database associated with the map layer, where the map layer comprises the data point and one or more other data points that indicate one or more other locations related to respective autonomous level transitions for one or more other vehicles associated with the road segment.

In an example embodiment for the computer-implemented method, the autonomous level data comprises an indication of a particular autonomous level for the vehicle after the transition. In another example embodiment for the computer-implemented method, the autonomous level data comprises a first indication of a first autonomous level for the vehicle prior to the transition and a second indication of a second autonomous level for the vehicle after the transition. In yet another example embodiment for the computer-implemented method, the autonomous level data comprises an indication of an increase or a decrease in the autonomous level for the vehicle after the transition. In an example embodiment, the computer-implemented method also includes aggregating the data point with another data point of the map layer in response to a determination that a distance between the data point and the other data point satisfies a defined criterion.

In another example embodiment, an apparatus is configured to generate an automated driving capability map index. The apparatus includes processing circuitry and at least one memory including computer program code instructions that are configured to, when executed by the processing circuitry, cause the apparatus to receive autonomous level data and location data thereof associated with a vehicle traveling along a road segment, where the autonomous level data is associated with a transition of an autonomous level for the vehicle with respect to the road segment. The computer program code instructions are also configured to, when executed by the processing circuitry, cause the apparatus to generate a data point for a map layer associated with the road segment based on the autonomous level data and the location data, where the data point indicates the transition of the autonomous level for the vehicle and a location associated with the transition of the autonomous level for the vehicle. The computer program code instructions are also configured to, when executed by the processing circuitry, cause the apparatus to store the data point in a database associated with the map layer, where the map layer comprises the data point and one or more other data points that indicate one or more other locations related to respective autonomous level transitions for one or more other vehicles associated with the road segment.

In an example embodiment for the apparatus, the autonomous level data comprises an indication of a particular autonomous level for the vehicle after the transition. In another example embodiment for the apparatus, the autonomous level data comprises a first indication of a first autonomous level for the vehicle prior to the transition and a second indication of a second autonomous level for the vehicle after the transition. In yet another example embodiment for the apparatus, the autonomous level data comprises an indication of an increase or a decrease in the autonomous level for the vehicle after the transition. In an example embodiment, the computer program code instructions are also configured to, when executed by the processing circuitry, cause the apparatus to aggregate the data point with another data point of the map layer in response to a determination that a distance between the data point and the other data point satisfies a defined criterion.

In another example embodiment, a computer program product is provided to generate an automated driving capability map index. The computer program product includes at least one non-transitory computer readable storage medium having computer-executable program code instructions stored therein with the computer-executable program code instructions including program code instructions configured, upon execution, to receive autonomous level data and location data thereof associated with a vehicle traveling along a road segment, where the autonomous level data is associated with a transition of an autonomous level for the vehicle with respect to the road segment. The computer-executable program code instructions are also configured to generate a data point for a map layer associated with the road segment based on the autonomous level data and the location data, where the data point indicates the transition of the autonomous level for the vehicle and a location associated with the transition of the autonomous level for the vehicle. Furthermore, the computer-executable program code instructions are configured to store the data point in a database associated with the map layer, where the map layer comprises the data point and one or more other data points that indicate one or more other locations related to respective autonomous level transitions for one or more other vehicles associated with the road segment.

In an example embodiment for the computer program product, the autonomous level data comprises an indication of a particular autonomous level for the vehicle after the transition. In another example embodiment for the computer program product, the autonomous level data comprises a first indication of a first autonomous level for the vehicle prior to the transition and a second indication of a second autonomous level for the vehicle after the transition. In yet another example embodiment for the computer program product, the autonomous level data comprises an indication of an increase or a decrease in the autonomous level for the vehicle after the transition. In an example embodiment, the computer-executable program code instructions are also configured to aggregate the data point with another data point of the map layer in response to a determination that a distance between the data point and the other data point satisfies a defined criterion.

In another example embodiment, an apparatus is provided that includes means for receiving autonomous level data and location data thereof associated with a vehicle traveling along a road segment, where the autonomous level data is associated with a transition of an autonomous level for the vehicle with respect to the road segment. The apparatus of this example embodiment also includes means for generating a data point for a map layer associated with the road segment based on the autonomous level data and the location data, where the data point indicates the transition of the autonomous level for the vehicle and a location associated with the transition of the autonomous level for the vehicle. The apparatus of this example embodiment also includes means for storing the data point in a database associated with the map layer, where the map layer comprises the data point and one or more other data points that indicate one or more other locations related to respective autonomous level transitions for one or more other vehicles associated with the road segment.

In an example embodiment for the apparatus, the autonomous level data comprises an indication of a particular autonomous level for the vehicle after the transition. In another example embodiment for the apparatus, the autonomous level data comprises a first indication of a first autonomous level for the vehicle prior to the transition and a second indication of a second autonomous level for the vehicle after the transition. In yet another example embodiment for the apparatus, the autonomous level data comprises an indication of an increase or a decrease in the autonomous level for the vehicle after the transition. In an example embodiment, apparatus of this example embodiment also includes means for aggregating the data point with another data point of the map layer in response to a determination that a distance between the data point and the other data point satisfies a defined criterion.

The following numbered paragraphs are also disclosed:

1. A computer-implemented method for generating an automated driving capability map index, the computer-implemented method comprising:

receiving autonomous level data and location data thereof associated with a vehicle traveling along a road segment, wherein the autonomous level data is identified based on a change in an autonomous level for the vehicle;
aggregating, based on the location data, the autonomous level data with other autonomous level data for one or more other vehicles associated with the road segment to generate aggregated autonomous level data for the road segment; and
encoding the aggregated autonomous level data in a database to facilitate an autonomous level prediction for vehicles associated with the road segment.

2. The computer-implemented method of paragraph 1, wherein the encoding the aggregated autonomous level data in the database comprises mapping the aggregated autonomous level data onto a map data layer of a high-definition map to facilitate the autonomous level prediction for the vehicles.

3. The computer-implemented method of paragraph 1, wherein the receiving the location data comprises:

receiving first location data associated with a decision by a processor of the vehicle to initiate the change in the autonomous level for the vehicle; and
receiving second location data associated with execution of the change in the autonomous level by the processor the vehicle,
wherein the aggregating the autonomous level data with the other autonomous level data comprises aggregating the autonomous level data with the other autonomous level data based on the first location data and the second location data.

4. The computer-implemented method of paragraph 3, further comprising:

receiving first time data associated with the decision to initiate the change in the autonomous level for the vehicle; and
receiving second time data associated with the execution of the change in the autonomous level for the vehicle,

wherein the aggregating the autonomous level data with the other autonomous level data comprises aggregating the autonomous level data with the other autonomous level data based on the first time data and the second time data.

5. The computer-implemented method of paragraph 1, further comprising:

receiving vehicle version data associated with one or more components of the vehicle that facilitate autonomous driving of the vehicle,
wherein the aggregating the autonomous level data with the other autonomous level data comprises aggregating the autonomous level data with the other autonomous level data based on the vehicle version data.

6. The computer-implemented method of paragraph 1, further comprising:

receiving vehicle data associated with a vehicle type for the vehicle,
wherein the aggregating the autonomous level data with the other autonomous level data comprises aggregating the autonomous level data with the other autonomous level data based on the vehicle data.

7. The computer-implemented method of paragraph 1, further comprising:

receiving vehicle context data associated with a reason for the change in the autonomous level for the vehicle,
wherein the aggregating the autonomous level data with the other autonomous level data comprises aggregating the autonomous level data with the other autonomous level data based on the vehicle context data.

8. The computer-implemented method of paragraph 1, further comprising:

determining a transition confidence value for the road segment based on a number of vehicles that are disengaged from a particular autonomous level while traveling along the road segment during an interval of time; and
encoding the transition confidence value in the database to facilitate the autonomous level prediction for the vehicles associated with the road segment.

9. The computer-implemented method of paragraph 8, wherein the determining the transition confidence value for the road segment comprises determining the transition confidence value for the road segment based on temporal data associated with timing for the change in the autonomous level for the vehicle.

10. The computer-implemented method of paragraph 8, wherein the determining the transition confidence value for the road segment comprises determining the transition confidence value for the road segment based on distance data associated with a distance between the vehicle and a particular location associated with the road segment during the change in the autonomous level for the vehicle.

11. An apparatus configured to generate an automated driving capability map index, the apparatus comprising processing circuitry and at least one memory including computer program code instructions, the computer program code instructions configured to, when executed by the processing circuity, cause the apparatus to:

receive autonomous level data and location data thereof associated with a vehicle traveling along a road segment, wherein the autonomous level data is identified based on a change in an autonomous level for the vehicle; aggregate, based on the location data, the autonomous level data with other autonomous level data for one or more other vehicles associated with the road segment to generate aggregated autonomous level data for the road segment; and

encode the aggregated autonomous level data in a database to facilitate an autonomous level prediction for vehicles associated with the road segment.

12. The apparatus of paragraph 11, wherein the computer program code instructions are further configured to, when executed by the processing circuitry, cause the apparatus to map the aggregated autonomous level data onto a map data layer of a high-definition map to facilitate the autonomous level prediction for the vehicles.

13. The apparatus of paragraph 11, wherein the computer program code instructions are further configured to, when executed by the processing circuitry, cause the apparatus to:

receive first location data associated with a decision by a processor of the vehicle to initiate the change in the autonomous level for the vehicle;

receive second location data associated with execution of the change in the autonomous level by the processor the vehicle; and

aggregate the autonomous level data with the other autonomous level data based on the first location data and the second location data.

14. The apparatus of paragraph 13, wherein the computer program code instructions are further configured to, when executed by the processing circuitry, cause the apparatus to:

receive first time data associated with the decision to initiate the change in the autonomous level for the vehicle; receive second time data associated with the execution of the change in the autonomous level for the vehicle; and aggregate the autonomous level data with the other autonomous level data based on the first time data and the second time data.

15. The apparatus of paragraph 11, wherein the computer program code instructions are further configured to, when executed by the processing circuitry, cause the apparatus to:

receive vehicle context data associated with a reason for the change in the autonomous level for the vehicle; and aggregate the autonomous level data with the other autonomous level data based on the vehicle context data.

16. An apparatus configured to generate an automated driving capability map index, the apparatus comprising processing circuitry and at least one memory including computer program code instructions, the computer program code instructions configured to, when executed by the processing circuity, cause the apparatus to:

receive autonomous level data and location data thereof associated with a vehicle traveling along a road segment, wherein the autonomous level data is associated with a transition of an autonomous level for the vehicle with respect to the road segment;

generate a data point for a map layer associated with the road segment based on the autonomous level data and the location data, wherein the data point indicates the transition of the autonomous level for the vehicle and a location associated with the transition of the autonomous level for the vehicle; and

store the data point in a database associated with the map layer, wherein the map layer comprises the data point and one or more other data points that indicate one or more other locations related to respective autonomous level transitions for one or more other vehicles associated with the road segment.

17. The apparatus of paragraph 16, wherein the autonomous level data comprises an indication of a particular autonomous level for the vehicle after the transition.

18. The apparatus of paragraph 16, wherein the autonomous level data comprises a first indication of a first autonomous level for the vehicle prior to the transition and a second indication of a second autonomous level for the vehicle after the transition.

19. The apparatus of paragraph 16, wherein the autonomous level data comprises an indication of an increase or a decrease in the autonomous level for the vehicle after the transition.

20. The apparatus of paragraph 16, wherein the computer program code instructions are further configured to, when executed by the processing circuitry, cause the apparatus to:

aggregate the data point with another data point of the map layer in response to a determination that a distance between the data point and the other data point satisfies a defined criterion.

**BRIEF DESCRIPTION OF THE DRAWINGS**

Having thus described certain embodiments of the disclosure in general terms, reference will now be made to the accompanying drawings, which are not necessarily drawn to scale, and wherein:

Figure 1 is a block diagram of a system including an apparatus for providing an automated driving capability map index for vehicles in accordance with one or more example embodiments of the present disclosure;
Figure 2 is a flowchart illustrating operations performed, such as by the apparatus of Figure 1, in order to provide for an automated driving capability map index for vehicles in accordance with one or more example embodiments of the present disclosure;
Figure 3 illustrates a vehicle with respect to a road segment in accordance with one or more example embodiments of the present disclosure;
Figure 4 is a block diagram of a system for using autonomous level data and location data to facilitate generation of map data in accordance with one or more example embodiments of the present disclosure;
Figure 5 illustrates aggregated autonomous level data in accordance with one or more example embodiments of the present disclosure;
Figure 6 illustrates an exemplary density-based clustering technique in accordance with one or more example embodiments of the present disclosure;
Figure 7 illustrates capturing of audio data with respect to the road segment of Figures 5 and 6 in accordance with one or more example embodiments of the present disclosure;
Figure 8 illustrates a map in accordance with one or more example embodiments of the present disclosure; and
Figure 9 is an example embodiment of an architecture specifically configured for implementing embodiments described herein.

**DETAILED DESCRIPTION**

Some embodiments of the present disclosure will now be described more fully hereinafter with reference to the accompanying drawings, in which some, but not all, embodiments of the disclosure are shown. Indeed, various embodiments of the disclosure can be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms can be used interchangeably to refer to data capable of being transmitted, received and/or stored in accordance with embodiments of the present disclosure. Thus, use of any such terms should not be taken to limit the spirit and scope of embodiments of the present disclosure.

A vehicle can become disengaged from an autonomous driving level due to, for example, environmental conditions, vehicle capabilities, sensor failures, software versions for components of a vehicle, hardware versions for components of a vehicle, sensor configurations for a vehicle, etc. To address these and/or other issues, a method, apparatus and computer program product are provided in accordance with an example embodiment in order to provide an automated driving capability map index for vehicles. In an embodiment, data can be collected from vehicles (e.g., autonomous driving vehicles) to facilitate mapping areas (e.g., road segments) along with a calculated likelihood that a level of autonomous driving will be possible or not for the areas. Accordingly, with this information, prediction as to whether a vehicle can successfully drive autonomously can be improved. Furthermore, in certain embodiments, navigation guidance for a vehicle can be re-routed to a route associated with an improved likelihood of driving autonomously. According to one or more embodiments, it can be determined when a level of autonomous driving mode for a vehicle is changed. In response to the change in the level of autonomous driving mode, data associated with the vehicle can collected. The collected data can include, for example, a vehicle make for the vehicle, a vehicle model for the vehicle, a previous autonomous level for the vehicle, a current autonomous level for the vehicle, a location of the vehicle during the change in the level of autonomous driving mode, a decision time of the vehicle associated with a decision to initiate the change in the level of autonomous driving mode, an execution time of the vehicle associated with execution of the change in the level of autonomous driving mode, version information for autonomous driving software and/or hardware employed by the vehicle, a reason for the change in the level of autonomous driving mode for the vehicle, and/or other information associated with the vehicle. In certain embodiments, data associated with multiple vehicles in an area can be collected via crowdsourcing to provide improved autonomous driving predictions for the area.

According to one or more embodiments, the data associated with the vehicles can be uploaded to a mapping server. Furthermore, the data from the vehicles can be aggregated into information to facilitate mapping and/or generating patterns for changes in autonomous driving modes for vehicles. In certain embodiments, an autonomous driving mode value can be mapped onto a road network and/or a road lane network. For example, in certain embodiments, an autonomous driving mode value can correspond to a number between 0-1 that corresponds to a percentage change of likelihood to demonstrate a particular autonomous level prediction. In certain embodiments, an autonomous driving mode value can be mapped by level of defined autonomy such as, for example, Level 0 that corresponds to no automation, Level 1 that corresponds to driver assistance, Level 2 that corresponds to partial automation, Level 3 that corresponds to conditional automation, Level 4 that corresponds to high automation, Level 5 that corresponds to full automation, and/or another sub-level associated with a degree of autonomous driving. In certain embodiments, different map layers can correspond to different levels of autonomous driving. Additionally, in certain embodiments, a map layer can be generated based on vehicle data such as, for example, a particular make/model of a vehicle, particular autonomous driving capabilities for a vehicle, other vehicle data, etc.

Accordingly, an automated driving capability map index for vehicles can be employed to provide improved autonomous driving and/or vehicle localization for a vehicle. Moreover, an automated driving capability map index for vehicles can provide additional dimensionality and/or advantages for one or more sensors of a vehicle. An automated driving capability map index for vehicles can also provide a low cost and/or efficient solution for improved autonomous driving and/or vehicle localization for a vehicle. Computational resources for improved autonomous driving and/or vehicle localization can also be conserved. An automated driving capability map index for vehicles can also provide a cost effective and/or efficient solution for improved autonomous driving and/or vehicle localization. Computational resources for improved autonomous driving and/or vehicle localization utilizing an automated driving capability map index for vehicles can also be relatively limited in order to allow the computational resources to be utilized for other purposes. An automated driving capability map index for vehicles may additionally facilitate improved navigation of a vehicle, improved route guidance for a vehicle, improved semi-autonomous vehicle control, and/or improved fully autonomous vehicle control.

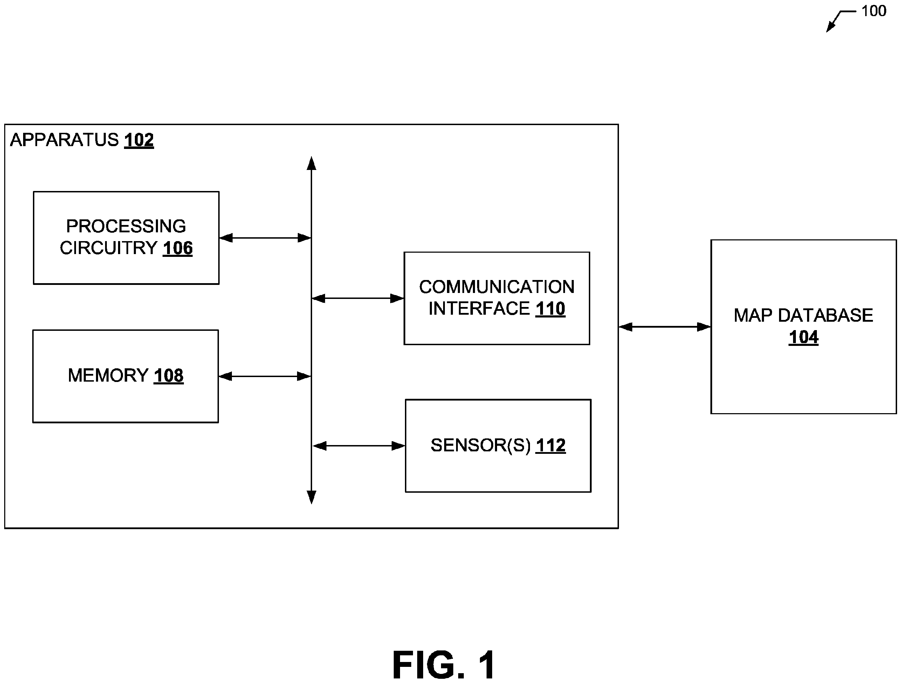

With reference to Figure 1, a system 100 configured to provide an automated driving capability map index for vehicles is depicted, in accordance with one or more embodiments of the present disclosure. In the illustrated embodiment, the system 100 includes an apparatus 102 and a map database 104. As described further below, the apparatus 102 is configured in accordance with an example embodiment of the present disclosure to assist navigation of a vehicle and/or to autonomous driving for a vehicle. The apparatus 102 can be embodied by any of a wide variety of computing devices including, for example, a computer system of a vehicle, a vehicle system of a vehicle, a navigation system of a vehicle, a control system of a vehicle, an electronic control unit of a vehicle, an autonomous vehicle control system (e.g., an autonomous-driving control system) of a vehicle, a mapping system of a vehicle, an Advanced Driver Assistance System module (ADAS of a vehicle), or any other type of computing device carried by or remote from the vehicle including, for example, a server or a distributed network of computing devices.

In an example embodiment where some level of vehicle autonomy is involved, the apparatus 102 can be embodied or partially embodied by a computing device of a vehicle that supports safety-critical systems such as the powertrain (engine, transmission, electric drive motors, etc.), steering (e.g., steering assist or steer-by-wire), and/or braking (e.g., brake assist or brake-by-wire). However, as certain embodiments described herein may optionally be used for map generation, map updating, and map accuracy confirmation, other embodiments of the apparatus may be embodied or partially embodied as a mobile terminal, such as a personal digital assistant (PDA), mobile telephone, smart phone, personal navigation device, smart watch, tablet computer, camera or any combination of the aforementioned and other types of voice and text communications systems. Regardless of the type of computing device that embodies the apparatus 102, the apparatus 102 of an example embodiment includes, is associated with or otherwise is in communication with processing circuitry 106, memory 108 and optionally a communication interface 110.

In some embodiments, the processing circuitry 106 (and/or co-processors or any other processors assisting or otherwise associated with the processing circuitry 106) can be in communication with the memory 108 via a bus for passing information among components of the apparatus 102. The memory 108 can be non-transitory and can include, for example, one or more volatile and/or non-volatile memories. In other words, for example, the memory 108 may be an electronic storage device (for example, a computer readable storage medium) comprising gates configured to store data (for example, bits) that can be retrievable by a machine (for example, a computing device like the processing circuitry 106). The memory 108 can be configured to store information, data, content, applications, instructions, or the like for enabling the apparatus 100 to carry out various functions in accordance with an example embodiment of the present disclosure. For example, the memory 108 can be configured to buffer input data for processing by the processing circuitry 106. Additionally or alternatively, the memory 108 can be configured to store instructions for execution by the processing circuitry 106.

The processing circuitry 106 can be embodied in a number of different ways. For example, the processing circuitry 106 may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry 106 can include one or more processing cores configured to perform independently. A multi-core processor can enable multiprocessing within a single physical package. Additionally or alternatively, the processing circuitry 106 can include one or more processors configured in tandem via the bus to enable independent execution of instructions, pipelining and/or multithreading.

In an example embodiment, the processing circuitry 106 can be configured to execute instructions stored in the memory 108 or otherwise accessible to the processing circuitry 106. Alternatively or additionally, the processing circuitry 106 can be configured to execute hard coded functionality. As such, whether configured by hardware or software methods, or by a combination thereof, the processing circuitry 106 can represent an entity (for example, physically embodied in circuitry) capable of performing operations according to an embodiment of the present disclosure while configured accordingly. Thus, for example, when the processing circuitry 106 is embodied as an ASIC, FPGA or the like, the processing circuitry 106 can be specifically configured hardware for conducting the operations described herein. Alternatively, as another example, when the processing circuitry 106 is embodied as an executor of software instructions, the instructions can specifically configure the processing circuitry 106 to perform the algorithms and/or operations described herein when the instructions are executed. However, in some cases, the processing circuitry 106 can be a processor of a specific device (for example, a computing device) configured to employ an embodiment of the present disclosure by further configuration of the processor by instructions for performing the algorithms and/or operations described herein. The processing circuitry 106 can include, among other things, a clock, an arithmetic logic unit (ALU) and/or one or more logic gates configured to support operation of the processing circuitry 106.

The apparatus 102 of an example embodiment can also optionally include the communication interface 110 that can be any means such as a device or circuitry embodied in either hardware or a combination of hardware and software that is configured to receive and/or transmit data from/to other electronic devices in communication with the apparatus 102, such as the map database 104 that stores data (e.g., map data, autonomous level data, location data, geo-referenced locations, time data, timestamp data, temporal data, vehicle data, vehicle version data, software version data, hardware version data, vehicle speed data, distance data, vehicle context data, statistical data, etc.) generated and/or employed by the processing circuitry 106. Additionally or alternatively, the communication interface 110 can be configured to communicate in accordance with various wireless protocols including Global System for Mobile Communications (GSM), such as but not limited to Long Term Evolution (LTE). In this regard, the communication interface 110 can include, for example, an antenna (or multiple antennas) and supporting hardware and/or software for enabling communications with a wireless communication network. In this regard, the communication interface 110 can include, for example, an antenna (or multiple antennas) and supporting hardware and/or software for enabling communications with a wireless communication network. Additionally or alternatively, the communication interface 110 can include the circuitry for interacting with the antenna(s) to cause transmission of signals via the antenna(s) or to handle receipt of signals received via the antenna(s). In some environments, the communication interface 110 can alternatively or also support wired communication and/or may alternatively support vehicle to vehicle or vehicle to infrastructure wireless links.

In certain embodiments, the apparatus 102 can be equipped or associated with one or more sensors 112, such as one or more GPS sensors, one or more accelerometer sensors, one or more LiDAR sensors, one or more radar sensors, one or more gyroscope sensors, one or more ultrasonic sensors, one or more infrared sensors and/or one or more other sensors. Any of the one or more sensors 112 may be used to sense information regarding movement, positioning, and/or orientation of the apparatus 102 for use in navigation assistance and/or autonomous vehicle control, as described herein according to example embodiments.

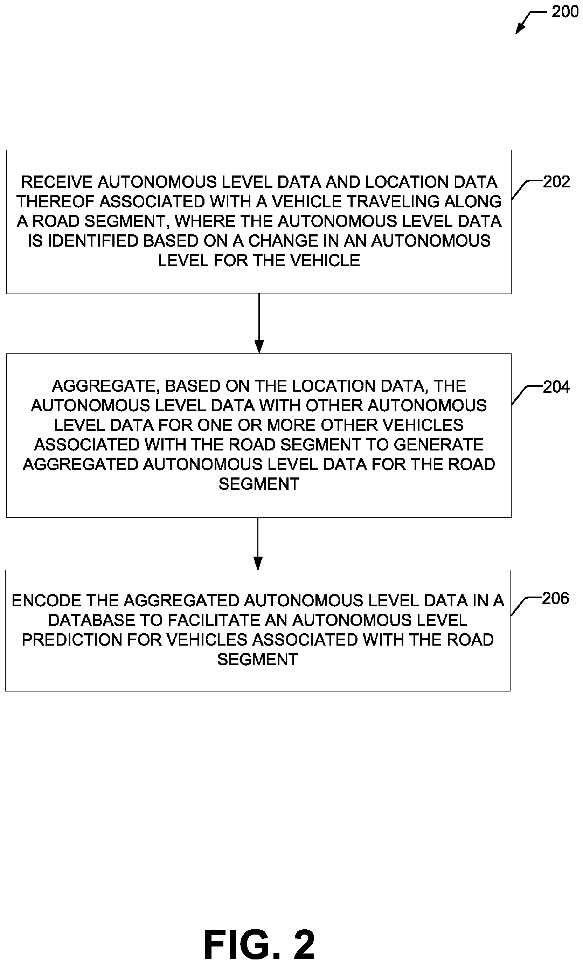

Figure 2 illustrates a flowchart depicting a method 200 according to an example embodiment of the present disclosure. It will be understood that each block of the flowchart and combination of blocks in the flowchart can be implemented by various means, such as hardware, firmware, processor, circuitry, and/or other communication devices associated with execution of software including one or more computer program instructions. For example, one or more of the procedures described above can be embodied by computer program instructions. In this regard, the computer program instructions which embody the procedures described above can be stored, for example, by the memory 108 of the apparatus 102 employing an embodiment of the present disclosure and executed by the processing circuitry 106. As will be appreciated, any such computer program instructions can be loaded onto a computer or other programmable apparatus (for example, hardware) to produce a machine, such that the resulting computer or other programmable apparatus implements the functions specified in the flowchart blocks. These computer program instructions can also be stored in a computer-readable memory that can direct a computer or other programmable apparatus to function in a particular manner, such that the instructions stored in the computer-readable memory produce an article of manufacture the execution of which implements the function specified in the flowchart blocks. The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

Referring now to Figure 2, the operations performed, such as by the apparatus 102 of Figure 1, in order to provide for generating an automated driving capability map index are depicted, in accordance with one or more embodiments of the present disclosure. As shown in block 202 of Figure 2, the apparatus 102 includes means, such as the processing circuitry 106, the memory 108, or the like, configured to receive autonomous level data and location data thereof associated with a vehicle traveling along a road segment. The autonomous level data is identified based on a change in an autonomous level for the vehicle. In one or more embodiments, the apparatus 102, such as the processing circuitry 106, can be configured to receive the autonomous level data and/or the location data (e.g., from the vehicle) in response to the change in the autonomous level for the vehicle. In one or more embodiments, the apparatus 102, such as the processing circuitry 106, can be configured to receive the autonomous level data and/or the location data from a database. In various embodiments, the change in the autonomous level for the vehicle can be determined and/or initiated by a processor (e.g., the processing circuity 106 or other processing circuitry) of the vehicle. The change in the autonomous level for the vehicle can be, for example, an increase in the autonomous level for the vehicle or a decrease in the autonomous level for the vehicle. For example, the change in the autonomous level for the vehicle can be a transition of an autonomous level for the vehicle.

The autonomous level data can include an autonomous level indicative of a level of defined autonomy (e.g., a degree of autonomous driving) associated with the vehicle. For instance, the autonomous level data can include an indication of a particular autonomous level for the vehicle associated with the change in the autonomous level. In certain embodiments, the autonomous level data can include a first indication of a first autonomous level for the vehicle prior to the change in the autonomous level and a second indication of a second autonomous level for the vehicle after the change in the autonomous level. In certain embodiments, the autonomous level data can include an indication of an increase or a decrease in the autonomous level for the vehicle after the change in the autonomous level. In an example, the level of defined autonomy indicated by the autonomous level data can include Level 0 that corresponds to no automation for the vehicle, Level 1 that corresponds to a certain degree of driver assistance for the vehicle, Level 2 that corresponds to partial automation for the vehicle, Level 3 that corresponds to conditional automation for the vehicle, Level 4 that corresponds to high automation for the vehicle, Level 5 that corresponds to full automation for the vehicle, and/or another sub-level associated with a degree of autonomous driving for the vehicle. In an embodiment, the autonomous level data can include first autonomous level data indicative of a first level of defined autonomy of the vehicle before the change in the autonomous level for the vehicle. Additionally or alternatively, the autonomous level data can include second autonomous level data indicative of a second level of defined autonomy of the vehicle after the change in the autonomous level for the vehicle. For example, in an embodiment the autonomous level data can include an indication of the autonomous-level that the vehicle changed from (e.g., Level 3) and/or an indication of the autonomous-level that the vehicle changed to (e.g., Level 2).

Autonomous driving has become a focus of recent technology with recent advances in machine learning, computer vision, and computing power able to conduct real-time mapping and sensing of a vehicle's environment. Such an understanding of the environment enables autonomous driving in two distinct ways. Primarily, real-time or near real-time sensing of the environment can provide information about potential obstacles, the behavior of others on the roadway, and areas that are navigable by the vehicle. An understanding of the location of other vehicles and/or what the other vehicles have done and may be predicted to do may be useful for a vehicle (or apparatus 102) to safely plan a route.

Autonomous vehicles or vehicles with some level of autonomous controls provide some degree of vehicle control that was previously performed by a person driving a vehicle. Removing some or all of the responsibilities of driving from a person and automating those responsibilities require a high degree of confidence in performing those responsibilities in a manner at least as good as a human driver. For example, maintaining a vehicle's position within a lane by a human involves steering the vehicle between observed lane markings and determining a lane when lane markings are faint, absent, or not visible due to weather (e.g., heavy rain, snow, bright sunlight, etc.). As such, it is desirable for the autonomous vehicle to be equipped with sensors sufficient to observe road features, and a controller that is capable of processing the signals from the sensors observing the road features, interpret those signals, and provide vehicle control to maintain the lane position of the vehicle based on the sensor data. Maintaining lane position is merely one illustrative example of a function of autonomous or semi-autonomous vehicles that demonstrates the sensor level and complexity of autonomous driving. However, autonomous vehicle capabilities, particularly in fully autonomous vehicles, must be capable of performing all driving functions. As such, the vehicles must be equipped with sensor packages that enable the functionality in a safe manner.

The location data can include information associated with a geographic location of the vehicle. For instance, the location data can include geographic coordinates for the vehicle. In an embodiment, the location data can include latitude data and/or longitude data defining the location of the vehicle. In an aspect, the apparatus 102, such as the processing circuitry 106, can receive the location data from the one or more sensors 112. For example, in an embodiment, the apparatus 102, such as the processing circuitry 106, can receive the location data from a GPS or other location sensor of the vehicle. In another embodiment, the apparatus 102, such as the processing circuitry 106, can receive the location data from a LiDAR sensor of the vehicle. In yet another embodiment, the apparatus 102, such as the processing circuitry 106, can receive the location data from one or more ultrasonic sensors and/or one or more infrared sensors of the vehicle. Additionally, in one or more embodiments, the location data can include information associated with the change in the autonomous level for the vehicle. For instance, in an embodiment, the location data can include first location associated with a decision by a processor (e.g., the processing circuity 106 or other processing circuitry) of the vehicle to initiate the change in the autonomous level for the vehicle. Additionally or alternatively, the location data can include second location data associated with execution of the change in the autonomous level by a processor (e.g., the processing circuity 106 or other processing circuitry) of the vehicle.

In certain embodiments, the apparatus 102, such as the processing circuitry 106, can be configured to additionally receive time data associated with a vehicle traveling along a road segment. The time data can be associated with the change in the autonomous level for the vehicle. In one or more embodiments, the apparatus 102, such as the processing circuitry 106, can be configured to receive first time data associated with the decision to initiate the change in the autonomous level for the vehicle. Additionally or alternatively, in one or more embodiments, the apparatus 102, such as the processing circuitry 106, can be configured to receive second time data associated with the execution of the change in the autonomous level for the vehicle. In certain embodiments, the apparatus 102, such as the processing circuitry 106, can be configured to additionally receive vehicle version data associated with one or more components of the vehicle that facilitate autonomous driving of the vehicle. In certain embodiments, the apparatus 102, such as the processing circuitry 106, can be configured to additionally receive vehicle data associated with a vehicle type for the vehicle. In certain embodiments, the apparatus 102, such as the processing circuitry 106, can be configured to additionally receive vehicle context data associated with a reason for the change in the autonomous level for the vehicle. In one or more embodiments, the apparatus 102, such as the processing circuitry 106, can be configured to receive the time data (e.g., the first time data and/or the second time data), the vehicle version data, the vehicle data and/or the vehicle context data (e.g., from the vehicle) in response to the change in the autonomous level for the vehicle. In one or more embodiments, the apparatus 102, such as the processing circuitry 106, can be configured to receive the time data (e.g., the first time data and/or the second time data), the vehicle version data, the vehicle data and/or the vehicle context data from a database.

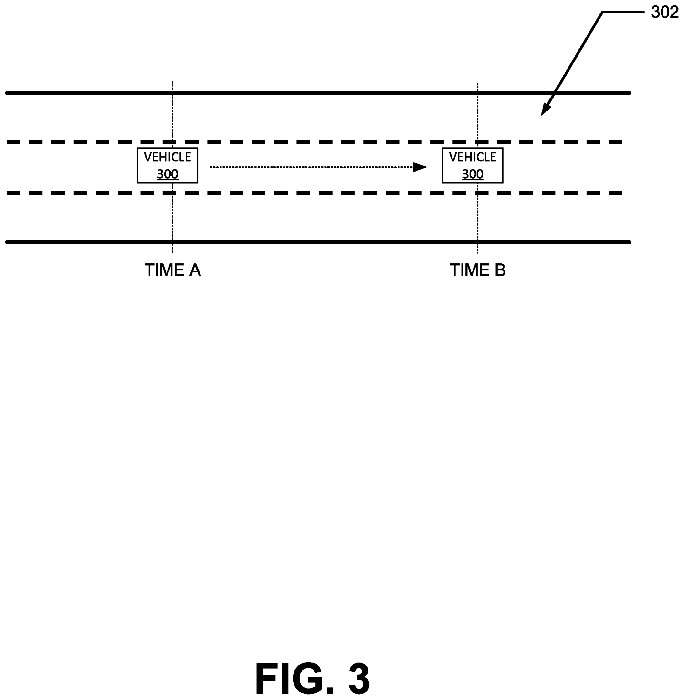

An example of the vehicle associated with the road segment is depicted in Figure 3. As shown in Figure 3, a vehicle 300 travels along a road segment 302. In one or more embodiments, the vehicle 300 can be an automobile where tires of the vehicle 300 are in contact with a road surface of the road segment 302. In an exemplary embodiment, the vehicle 300 can be associated with a first level of defined autonomy (e.g., Level 3) at a first time (e.g., TIME A shown in Figure 3). Furthermore, at the first time (e.g., TIME A), the vehicle 300 can be associated with a first location (e.g., a particular latitude and/or longitude). In certain embodiments, the vehicle 300 (e.g., a processor of the vehicle 300) can initiate a change in the autonomous level for the vehicle 300. For example, at the first time (e.g., TIME A shown in Figure 3), the vehicle 300 can initiate the change in the autonomous level. Additionally, at a second time (e.g., TIME B shown in Figure 3), the vehicle 300 can be associated with a second level of defined autonomy (e.g., Level 2). Furthermore, at the second time (e.g., TIME B), the vehicle 300 can be associated with a second location (e.g., a different latitude and/or longitude).

As shown in block 204 of Figure 2, the apparatus 102 includes means, such as the processing circuitry 106, the memory 108, or the like, configured to aggregate, based on the location data, the autonomous level data with other autonomous level data for one or more other vehicles associated with the road segment to generate aggregated autonomous level data for the road segment. In one or more embodiments, the apparatus 102, such as the processing circuitry 106, can be configured to aggregate the autonomous level data with the other autonomous level data based on the location data (e.g., the first location data and/or the second location data). For example, in one or more embodiments, the apparatus 102, such as the processing circuitry 106, can be configured to aggregate autonomous level data with similar location. In an embodiment, the apparatus 102, such as the processing circuitry 106, can be configured to aggregate autonomous level data from two or more vehicles in response to a determination that the two or more vehicles are within a predefined distance of a location associated with a change in an autonomous level for the two or more vehicles. In another embodiment, the apparatus 102, such as the processing circuitry 106, can be configured to aggregate autonomous level data from two or more vehicles in response to a determination that the two or more vehicles are within a corresponding region of interest (e.g., a corresponding area associated with a road segment and/or a geographic region).

In one or more embodiments, the apparatus 102, such as the processing circuitry 106, can be configured to aggregate the autonomous level data with the other autonomous level data based on time data (e.g., the first time data and/or the second time data). For example, in one or more embodiments, the apparatus 102, such as the processing circuitry 106, can be configured to aggregate autonomous level data with similar timing information (e.g., a similar time of day, a similar day of week, a similar season, etc.). In an embodiment, the apparatus 102, such as the processing circuitry 106, can be configured to aggregate autonomous level data from two or more vehicles in response to a determination that time data for the two or more vehicles are deemed to be similar. In one or more embodiments, the apparatus 102, such as the processing circuitry 106, can be configured to aggregate the autonomous level data with the other autonomous level data based on vehicle data. For example, in one or more embodiments, the apparatus 102, such as the processing circuitry 106, can be configured to aggregate autonomous level data with similar a similar make and/or a similar model. In an embodiment, the apparatus 102, such as the processing circuitry 106, can be configured to aggregate autonomous level data from two or more vehicles in response to a determination that the two or more vehicles are a same vehicle make and/or a same vehicle model.

In one or more embodiments, the apparatus 102, such as the processing circuitry 106, can be configured to aggregate the autonomous level data with the other autonomous level data based on vehicle version data. For example, in one or more embodiments, the apparatus 102, such as the processing circuitry 106, can be configured to aggregate autonomous level data with a same vehicle software version related to autonomous driving. In an embodiment, the apparatus 102, such as the processing circuitry 106, can be configured to aggregate autonomous level data from two or more vehicles in response to a determination that the two or more vehicles comprise a same software version related to autonomous driving. In one or more embodiments, the apparatus 102, such as the processing circuitry 106, can be configured to aggregate the autonomous level data with the other autonomous level data based on vehicle context data. For example, in one or more embodiments, the apparatus 102, such as the processing circuitry 106, can be configured to aggregate autonomous level data with a same reason for the change in the autonomous level. In an embodiment, the apparatus 102, such as the processing circuitry 106, can be configured to aggregate autonomous level data from two or more vehicles in response to a determination that the two or more vehicles comprise a same reason for the change in the autonomous level.

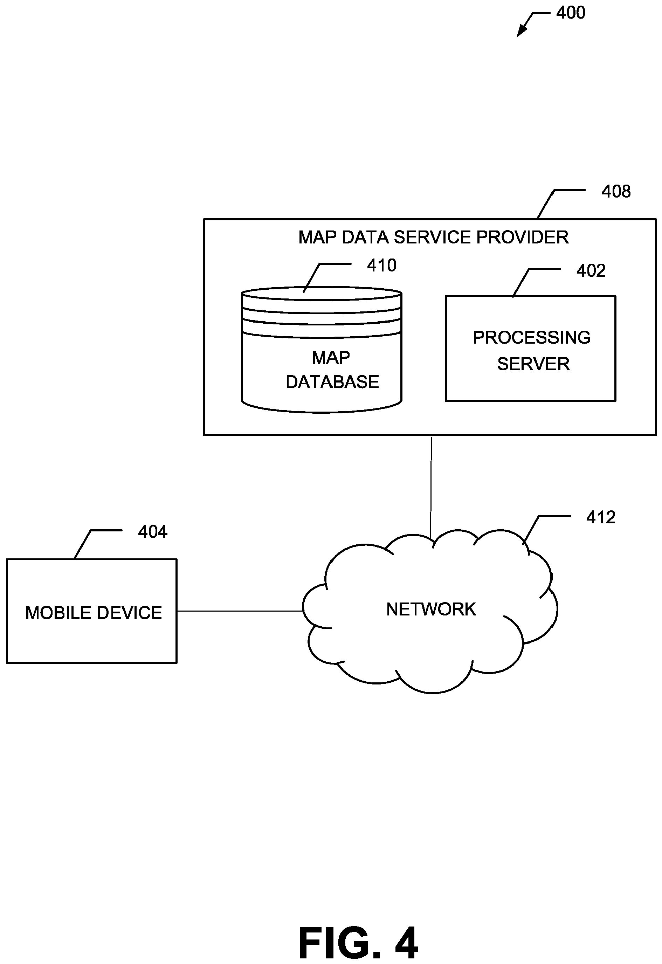

In certain embodiments, to facilitate generation of the autonomous level data for the road segment, the apparatus 102 can support a mapping, navigation, and/or autonomous driving application so as to present maps or otherwise provide navigation or driver assistance, such as in an example embodiment in which map data is created or updated using methods described herein. For example, the apparatus 102 can provide for display of a map and/or instructions for following a route within a network of roads via a user interface (e.g., a graphical user interface). In order to support a mapping application, the apparatus 102 can include or otherwise be in communication with a geographic database, such as map database 104, a geographic database stored in the memory 108, and/or map database 410 shown in Figure 4. For example, the geographic database can include node data records, road segment or link data records, point of interest (POI) data records, and other data records. More, fewer or different data records can be provided. In one embodiment, the other data records include cartographic data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GPS data associations (such as using known or future map matching or geo-coding techniques), for example. Furthermore, other positioning technology can be used, such as electronic horizon sensors, radar, LiDAR, ultrasonic sensors and/or infrared sensors. In one or more embodiments, the other autonomous level data can be stored in the map database 104, the map database 410, and/or another database accessible by the apparatus 102.

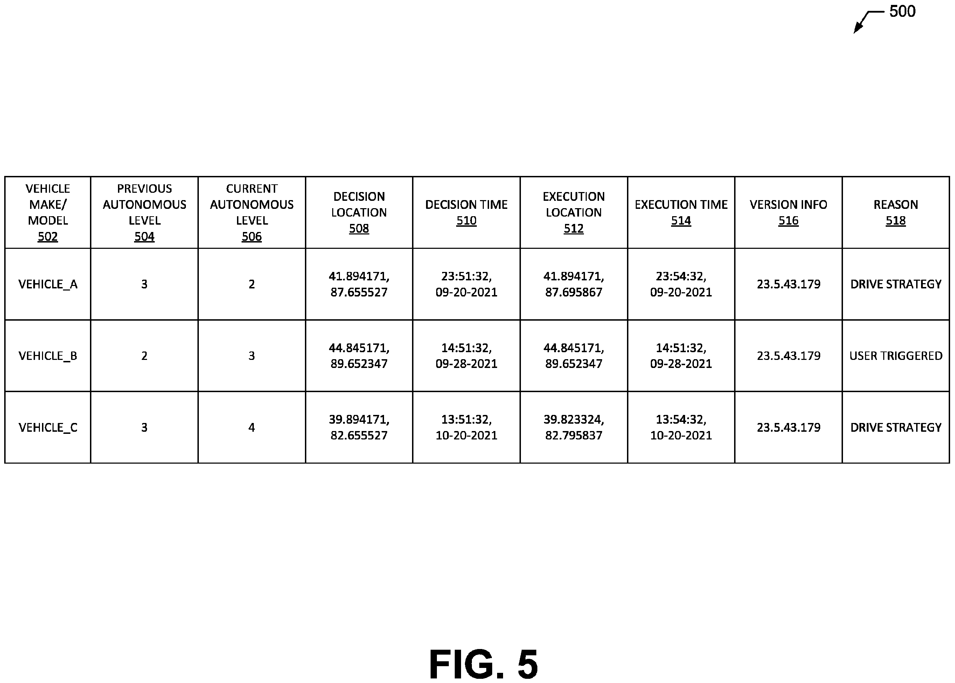

An example of aggregated autonomous level data is depicted in Figure 5. As shown in Figure 5, aggregated autonomous level data 500 includes a vehicle make/model 502, a previous autonomous level 504, a current autonomous level 506, a decision location 508, a decision time 510, an execution location 512, an execution time 514, version info 516 and/or a reason 518. In one or more embodiments, the vehicle make/model 502 can be an identifier for a vehicle make and/or a vehicle model. The previous autonomous level 504 can be an indication of an autonomous level from which a vehicle changed from. The current autonomous level 506 can be an indication of an autonomous level from which a vehicle changed to. The decision location 508 can be a location in which a vehicle initiates a change in the autonomous level from the previous autonomous level 504 to the current autonomous level 506. The decision time 510 can include a time and/or a date (e.g., a timestamp) that indicates the time and/or the date in which a vehicle initiates a change in the autonomous level from the previous autonomous level 504 to the current autonomous level 506. The execution location 512 can be a location in which the autonomous level for the vehicle is changed to the current autonomous level 506. The execution time 514 can include a time and/or a date (e.g., a timestamp) that indicates the time and/or the date in which the autonomous level for the vehicle is changed to the current autonomous level 506. The version info 516 can indicate a version of software (e.g., firmware) and/or hardware related to autonomous driving (e.g., self-driving capabilities and/or decision) and/or vehicle navigation. The reason 518 corresponds to the reason for the change in the autonomous level from the previous autonomous level 504 to the current autonomous level 506. For example, the reason 518 can include a user triggered reason (e.g., a reason not triggered by a drive strategy on the vehicle, but rather a driver), a drive strategy reason (e.g., an anticipated change up or down in an autonomous mode initiated by drive strategy such as, for example, a difficult road segment, road work, a construction zone, a toll plaza, etc.), a conflict-related reason (e.g., a conflict between map data and sensor observations), an environmental-related reason (e.g., weather related, etc.).

In an example, the aggregated autonomous level data 500 can include data aggregated from three vehicles. For instance, as shown in Figure 5, the aggregated autonomous level data 500 can include data for a first vehicle where the vehicle make/model 502 corresponds to VEHICLE A, the previous autonomous level 504 is equal to 3, the current autonomous level 506 is equal to 2, the decision location 508 is equal to latitude/longitude values (41.894171, 87.655527), the decision time 510 includes a time and a date (23:51:32, 09-20-2021), the execution location 512 is equal to latitude/longitude values (41.894171, 87.695867), the execution time 514 includes a time and a date (23:54:32, 09-20-2021), the version info 516 is equal to 23.5.43.179, and/or the reason 518 corresponds to a drive strategy. Additionally, the aggregated autonomous level data 500 can include data for a second vehicle where the vehicle make/model 502 corresponds to VEHICLE_B, the previous autonomous level 504 is equal to 2, the current autonomous level 506 is equal to 3, the decision location 508 is equal to latitude/longitude values (44.845171, 89.652347), the decision time 510 includes a time and a date (14:51:32, 09-28-2021), the execution location 512 is equal to latitude/longitude values (44.845171, 89.652347), the execution time 514 includes a time and a date (14:51:32, 09-28-2021), the version info 516 is equal to 23.5.43.179, and/or the reason 518 corresponds to user triggered. The aggregated autonomous level data 500 can also include data for a third vehicle where the vehicle make/model 502 corresponds to VEHICLE_C, the previous autonomous level 504 is equal to 3, the current autonomous level 506 is equal to 4, the decision location 508 is equal to latitude/longitude values (39.894171, 82.655527), the decision time 510 includes a time and a date (13:51:32, 10-20-2021), the execution location 512 is equal to latitude/longitude values (39.823324, 82.795837), the execution time 514 includes a time and a date (13:54:32, 10-20-2021), the version info 516 is equal to 23.5.43.179, and/or the reason 518 corresponds to a drive strategy.

In example embodiments, a navigation system user interface and/or an autonomous driving user interface can be provided to provide driver assistance to a user traveling along a network of roadways where data collected from the vehicle (e.g., the vehicle 300) associated with the navigation system user interface can aid in establishing a position of the vehicle along a road segment (e.g., the road segment 302) and/or can provide assistance for autonomous or semi-autonomous vehicle control of the vehicle. Autonomous vehicle control can include driverless vehicle capability where all vehicle functions are provided by software and hardware to safely drive the vehicle along a path identified by the vehicle. Semi-autonomous vehicle control can be any level of driver assistance from adaptive cruise control, to lane-keep assist, or the like. Establishing vehicle location and position along a road segment can provide information useful to navigation and autonomous or semi-autonomous vehicle control by establishing an accurate and highly specific position of the vehicle on a road segment and even within a lane of the road segment such that map features in the map, e.g., a high definition (HD) map, associated with the specific position of the vehicle can be reliably used to aid in guidance and vehicle control.

A map service provider database can be used to provide driver assistance, such as via a navigation system and/or through an Advanced Driver Assistance System (ADAS) having autonomous or semi-autonomous vehicle control features. Referring back to Figure 4, illustrated is a communication diagram of an example embodiment of a system for implementing example embodiments described herein. The illustrated embodiment of Figure 4 includes a mobile device 404, which can be, for example, the apparatus 102 of Figure 1, such as a mobile phone, an in-vehicle navigation system, an ADAS, or the like. The illustrated embodiment of Figure 4 also includes a map data service provider 408. The mobile device 404 and the map data service provider 408 can be in communication via a network 412. The network 412 can be any form of wireless or partially wireless network as will be described further below. Additional, different, or fewer components can be provided. For example, many mobile devices 404 can connect with the network 412. In an embodiment, the map data service provider can be a cloud service. For instance, in certain embodiments, the map data service provider 408 can provide cloud-based services and/or can operate via a hosting server that receives, processes, and provides data to other elements of the system 400.

The map data service provider 408 can include a map database 410 that can include node data, road segment data or link data, point of interest (POI) data, traffic data or the like. In one embodiment, the map database 410 can be different than the map database 104. In another embodiment, at least a portion of the map database 410 can correspond to the map database 104. The map database 410 can also include cartographic data, routing data, and/or maneuvering data. According to some example embodiments, the road segment data records can be links or segments representing roads, streets, or paths, as can be used in calculating a route or recorded route information for determination of one or more personalized routes. The node data can be end points corresponding to the respective links or segments of road segment data. The road link data and the node data can represent a road network, such as used by vehicles, cars, trucks, buses, motorcycles, and/or other entities. Optionally, the map database 410 can contain path segment and node data records or other data that can represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 410 can include data about the POIs and their respective locations in the POI records. The map database 410 can include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 410 can include event data (e.g., traffic incidents, construction activities, scheduled events, unscheduled events, etc.) associated with the POI data records or other records of the map database 410.

The map database 410 can be maintained by the map data service provider 408 and can be accessed, for example, by a processing server 402 of the map data service provider 408. By way of example, the map data service provider 408 can collect geographic data and/or dynamic data to generate and enhance the map database 410. In one example, the dynamic data can include traffic-related data. There can be different ways used by the map data service provider 408 to collect data. These ways can include obtaining data from other sources, such as municipalities or respective geographic authorities, such as via global information system databases. In addition, the map data service provider 408 can employ field personnel to travel by vehicle along roads throughout the geographic region to observe features and/or record information about them, for example. Also, remote sensing, such as aerial or satellite photography and/or LiDAR, can be used to generate map geometries directly or through machine learning as described herein. However, the most ubiquitous form of data that can be available is vehicle data provided by vehicles, such as provided, e.g., as probe points, by mobile device 404, as they travel the roads throughout a region.

In certain embodiments, at least a portion of the map database 104 can be included in the map database 410. In an embodiment, the map database 410 can be a master map database, such as an HD map database, stored in a format that facilitates updates, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems. For example, geographic data can be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle represented by mobile device 404, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the map database 410 of the map data service provider 408 can be a master geographic database, but in alternate embodiments, a client side map database can represent a compiled navigation database that can be used in or with end user devices (e.g., mobile device 404) to provide navigation and/or map-related functions. For example, the map database 410 can be used with the mobile device 404 to provide an end user with navigation features. In such a case, the map database 410 can be downloaded or stored on the end user device which can access the map database 410 through a wireless or wired connection, such as via a processing server 402 and/or the network 412, for example.

In one embodiment, as noted above, the end user device or mobile device 404 can be embodied by the apparatus 102 of Figure 1 and can include an ADAS which can include an infotainment in-vehicle system or an in-vehicle navigation system, and/or devices such as a personal navigation device (PND), a portable navigation device, a cellular telephone, a smart phone, a personal digital assistant (PDA), a watch, a camera, a computer, a server and/or other device that can perform navigation-related functions, such as digital routing and map display. An end user can use the mobile device 404 for navigation and map functions such as guidance and map display, for example, and for determination of useful driver assistance information, according to some example embodiments.

In certain embodiments, the apparatus 102, such as the processing circuitry 106, can be configured to aggregate the autonomous level data with other autonomous level data based on a density-based clustering technique, such as, for example, density-based spatial clustering of applications with noise (DB-SCAN). For example, in one or more embodiments, the apparatus 102, such as the processing circuitry 106, can be configured to aggregate locations associated with a change in an autonomous level via distance using the DB-SCAN. In an embodiment, the apparatus 102, such as the processing circuitry 106, can be configured to employ a first input parameter (e.g., the minimum number of vehicles required to form a road segment region) and/or a second input parameter (e.g., the distance between the vehicles for the vehicles to be considered related) to form a cluster.

In one or more embodiments, the apparatus 102, such as the processing circuitry 106, can be configured to generate an autonomous transition region based on a cluster. The autonomous transition region can be a region of one or more road segments where an autonomous level for vehicles is likely to change. In certain embodiments, the apparatus 102, such as the processing circuitry 106, can be configured to designate a cluster as an autonomous transition region in response to a determination that a minimum number of vehicles is within the autonomous transition region. Furthermore, the apparatus 102, such as the processing circuitry 106, can be configured to criterion associated with distance to determine an autonomous transition region. For example, the apparatus 102, such as the processing circuitry 106, can be configured to initially set an autonomous transition region to correspond to 30 meters in size. Furthermore, in certain embodiments, the apparatus 102, such as the processing circuitry 106, can be configured to dynamically alter a size of the autonomous transition region based on a number of vehicles in the autonomous transition region and/or other conditions associated with the autonomous transition region. In an embodiment, the autonomous transition region can correspond to a geometric shape that is spatially represented as, for example, a point, a line, a polygon, or another geometric shape.

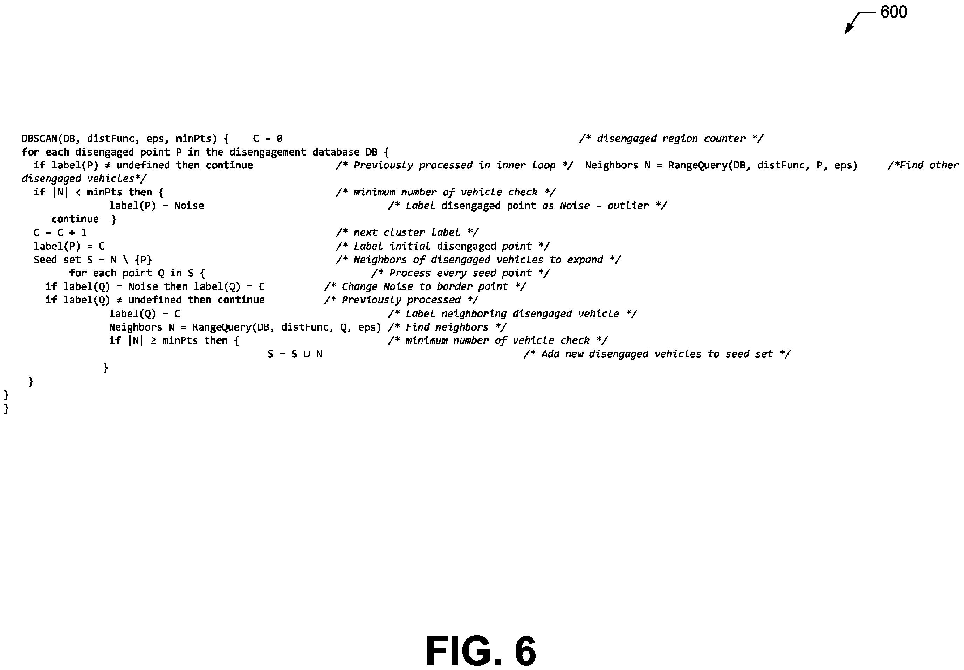

An exemplary density-based clustering technique 600 is depicted in Figure 6. In one or more embodiments, the density-based clustering technique 600 can be weighted based on distance and/or time. For example, in certain embodiments, the apparatus 102, such as the processing circuitry 106, can be configured to weight vehicles in closer proximity with a greater weight. Additionally or alternatively, in certain embodiments, the apparatus 102, such as the processing circuitry 106, can be configured to weight vehicles with a more recent vehicle timestamp information with more weight. Further, the apparatus 102, such as the processing circuitry 106, can be configured to provide a greater weight to vehicles within an autonomous transition region with a greater number of vehicles. In an exemplary embodiment, the apparatus 102, such as the processing circuitry 106, can be configured to calculate a distance weight as distance weight = 1 - $e^{-(d/\text{distance between disengaged vehicles})}$, where d can correspond to a calibrated constant.

In one or more embodiments, the apparatus 102, such as the processing circuitry 106, can be configured to determine a transition confidence value for the road segment based on a number of vehicles that are disengaged from a particular autonomous level while traveling along the road segment during an interval of time. The transition confidence value can provide an indication of a likelihood for a vehicle to change an autonomous level within a road segment and/or an autonomous transition region. When the transition confidence value is high, a probability of a change in an autonomous level can be higher. Furthermore, when a transition confidence value is low, then a probability of a change in an autonomous level can be lower. In one or more embodiments, the apparatus 102, such as the processing circuitry 106, can be configured to determine a transition confidence value for an autonomous transition region based on a number of vehicles that are disengaged from a particular autonomous level while traveling along the road segment during an interval of time. In certain embodiments, the apparatus 102, such as the processing circuitry 106, can be configured to determine a transition confidence value for the road segment based on temporal data associated with timing for the change in the autonomous level for the vehicle. Additionally or alternatively, in certain embodiments, the apparatus 102, such as the processing circuitry 106, can be configured to determine a transition confidence value for the road segment based on distance data associated with a distance between the vehicle and a particular location associated with the road segment during the change in the autonomous level for the vehicle.

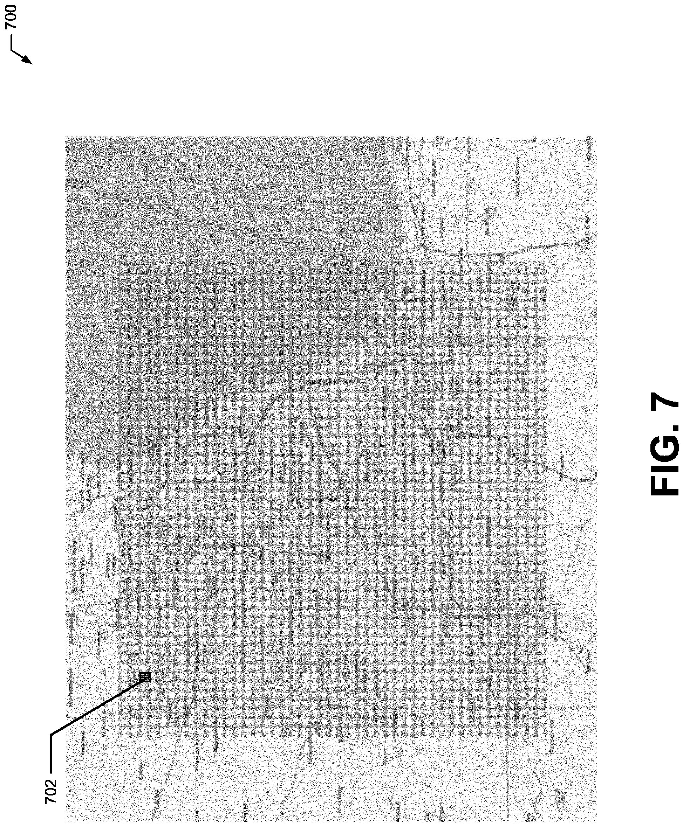

Figure 7 illustrates a map 700 that divided into autonomous transition region. For example, the map 700 includes at least an autonomous transition region 702. In an embodiment, the autonomous transition region 702 can be a tile cell or a grid cell. In a non-limiting example, the autonomous transition region 702 can be a 2 kilometer by 2 kilometer tile cell. However, it is to be appreciated that the autonomous transition region 702 can be a different shape and/or a different size. In one or more embodiments, the apparatus 102, such as the processing circuitry 106, can be configured to determine a transition confidence value for the autonomous transition region 702 per time epoch (e.g., every hour, every 15 minutes, etc.). In certain embodiments, the apparatus 102, such as the processing circuitry 106, can be configured to calculate transition confidence values for respective autonomous transition regions based on different time epochs. For example, the apparatus 102, such as the processing circuitry 106, can be configured to calculate a transition confidence value for the autonomous transition region 702 using a particular time epoch and another transition confidence value for another autonomous transition region using a different time epoch. In one or more embodiments, the apparatus 102, such as the processing circuitry 106, can be configured to calculate a transition confidence value for the autonomous transition region 702 based on a number of vehicles that change an autonomous level during the time epoch, a freshness (e.g., temporal dimension) of transition confidence data from vehicles, a distance of a vehicle from a centroid of the autonomous transition region 702, a transition vehicle trustworthiness score (e.g., based on a vehicle make or model), and/or other data associated with the autonomous transition region 702 and/or vehicles within the autonomous transition region 702.

In an embodiment, a time-based weight employed by the apparatus 102, such as the processing circuitry 106, can be equal to:

$$W_T = 1 - e^{-\frac{t}{age}of\ disengagement\ report}$$

where $W_T$ is the time weight, t is a configurable constant, and "age of the disengagement report" is the freshness of the transition data provided by a vehicle.

In another embodiment, a distance-based weight employed by the apparatus 102, such as the processing circuitry 106, can be equal to:

$$W_D = 1 - e^{-\frac{d}{disengagedDistanceFromTileCentroid}}$$

Where $W_D$ is the distance weight, d is a configurable constant, and "distance from Location" is the distance of a vehicle from the centroid of the autonomous transition region 702. In one or more embodiments, the apparatus 102, such as the processing circuitry 106, can be configured to employ a Euclidean distance measure or another type of distance measure.

In yet another embodiment, a transition vehicle trustworthiness score Wi employed by the apparatus 102, such as the processing circuitry 106, can be equal to $W_i = W_t*W_d*Q$, where i corresponds to a vehicle, Q is a personalized trustworthiness score for the vehicle. For example, if Q = 90%, it can be predicted that 9 out of 10 times when a vehicle reports a true transition to another autonomous level. In certain embodiments, the apparatus 102, such as the processing circuitry 106, can be configured to employ historical transition data to compute Q.

In yet another embodiment, a transition confidence value employed by the apparatus 102, such as the processing circuitry 106, can be equal to:

$$Tile\ level\ disengagement\ confidence = 1 - \prod_{i=1}^{N} (1 - (W^i * x))^y$$

where N is the number of vehicles that are reporting transition activities, $W^i$ is a weight, and x and y are configurable constants.

In certain embodiments, the apparatus 102, such as the processing circuitry 106, can be configured to compute a multi-level transition confidence value for a road segment and/or an autonomous transition region. For example, in certain embodiments, the apparatus 102, such as the processing circuitry 106, can be configured to compute a first transition confidence value associated with a first road condition (e.g., road construction), a second transition confidence value associated with a second road condition (e.g., high pedestrian traffic), and/or a third transition confidence value associated with communication signal strength for vehicles (e.g., loss of a communication signal).

As shown in block 206 of Figure 2, the apparatus 102 also includes means, such as the processing circuitry 106, the memory 108, or the like, configured to encode the aggregated autonomous level data in a database to facilitate an autonomous level prediction for vehicles associated with the road segment. For example, in one or more embodiments, the aggregated autonomous level data can be encoded into the map database 104, the map database 410, and/or another database accessible by the apparatus 102. In one or more embodiments, the aggregated autonomous level data can be encoded in a database based on a format of the aggregated autonomous level data shown in Figure 5. For example, in one or more embodiments, the aggregated autonomous level data can be encoded in a database based on the vehicle make/model 502, the previous autonomous level 504, the current autonomous level 506, the decision location 508, the decision time 510, the execution location 512, the execution time 514, the version info 516 and/or the reason 518. In certain embodiments, the apparatus 102, such as the processing circuitry 106, can be configured to convert the aggregated autonomous level data into a format for storage and/or categorization by the database. In certain embodiments, the apparatus 102, such as the processing circuitry 106, can be configured to additionally encode the transition confidence value in the database to facilitate the autonomous level prediction for the vehicles associated with the road segment.

In certain embodiments, the apparatus 102, such as the processing circuitry 106, can be configured to map the aggregated autonomous level data onto one or more map data layers of a map (e.g., an HD map) to facilitate the autonomous level prediction for the vehicles. For instance, in certain embodiments, the apparatus 102, such as the processing circuitry 106, can be configured to store the aggregated autonomous level data in a map data layer of a map (e.g., an HD map) for mapping purposes, navigation purposes, and/or autonomous driving purposes. In certain embodiments, the apparatus 102, such as the processing circuitry 106, can be configured to store the aggregated autonomous level data in two or more map data layer of a map (e.g., an HD map) for mapping purposes, navigation purposes, and/or autonomous driving purposes. For example, in an embodiment, aggregated autonomous level data for a first type of vehicle model can be stored in a first map data layer, aggregated autonomous level data for a second type of vehicle model can be stored in a second map data layer, etc. Additionally or alternatively, in an embodiment, aggregated autonomous level data for a first location can be stored in a first map data layer, aggregated autonomous level data for a second location can be stored in a second map data layer, etc. Additionally or alternatively, in an embodiment, aggregated autonomous level data for a first time or date can be stored in a first map data layer, aggregated autonomous level data for a second time or date can be stored in a second map data layer, etc. Additionally or alternatively, in an embodiment, aggregated autonomous level data for a first type of vehicle version can be stored in a first map data layer, aggregated autonomous level data for a second type of vehicle version can be stored in a second map data layer, etc. Additionally or alternatively, in an embodiment, aggregated autonomous level data for a first type of reason can be stored in a first map data layer, aggregated autonomous level data for a second type of reason can be stored in a second map data layer, etc. Additionally or alternatively, in an embodiment, aggregated autonomous level data for vehicles traveling in a first direction with respect to a road segment can be stored in a first map data layer, aggregated autonomous level data for vehicles traveling in a first direction with respect to a road segment can be stored in a second map data layer, etc. In certain embodiments, the apparatus 102, such as the processing circuitry 106, can be configured to link and/or associate the aggregated autonomous level data with one or more portions, components, areas, layers, features, text, symbols, and/or data records of a map (e.g., an HD map).

In one or more embodiments, the apparatus 102, such as the processing circuitry 106, can be configured to generate a data point for a map layer associated with the road segment based on the autonomous level data and the location data. The data point can indicate the transition of the autonomous level for the vehicle and/or a location associated with the transition of the autonomous level for the vehicle. Additionally or alternatively, in one or more embodiments, the apparatus 102, such as the processing circuitry 106, can be configured to store the data point in the database associated with the map layer. The map layer can include the data point and one or more other data points that indicate one or more other locations related to respective autonomous level transitions for one or more other vehicles associated with the road segment. In certain embodiments, the apparatus 102, such as the processing circuitry 106, can be configured to aggregate the data point with another data point of the map layer in response to a determination that a distance between the data point and the other data point satisfies a defined criterion.

In one or more embodiments, the apparatus 102, such as the processing circuitry 106, can be configured to generate one or more road links (e.g., one or more map-matched road links) for the road segment to facilitate an autonomous level prediction for vehicles associated with the road segment. For instance, in one or more embodiments, the apparatus 102, such as the processing circuitry 106, can be configured to map a calculated value onto a road network map. In certain embodiments, the calculated value can correspond to a number between 0-1. For instance, in certain embodiments, the calculated value (e.g., the number between 0-1) can correspond to a percentage chance of likelihood to demonstrate autonomous level prediction. In an aspect, the apparatus 102, such as the processing circuitry 106, can be configured to map the calculated value based on level of defined autonomy. In an example, a first map layer for the road segment can indicate a calculated value for predicted Level 2 capabilities, a second map layer for the road segment can indicate a calculated value for predicted Level 3 capabilities, a third map layer for the road segment can indicate a calculated value for predicted Level 4 capabilities, a fourth map layer for the road segment can indicate a calculated value for predicted Level 5 capabilities, and/or another map layer for the road segment can indicate a calculated value for capabilities of a sub-level associated with a degree of autonomous driving for the vehicle. In one or more embodiments, a calculated value for the autonomous level prediction can be generated based on autonomous level data, location data, time data, vehicle version data, vehicle data, vehicle context data and/or other data included in the aggregated autonomous level data. In an embodiment, a calculated value for the autonomous level prediction can be an automated driving capability map index.

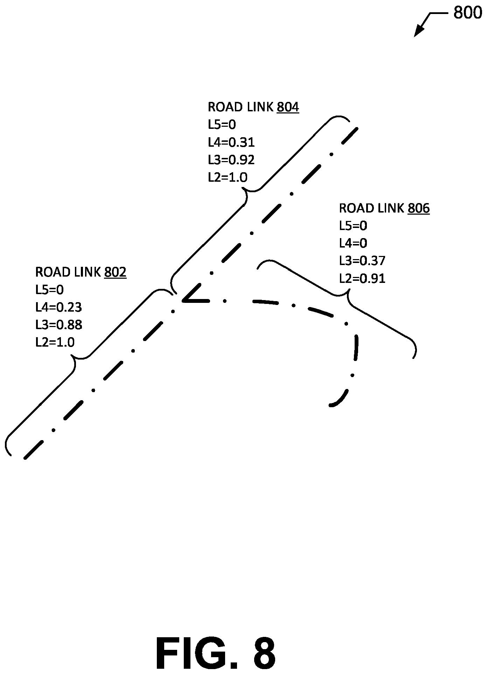

An example of aggregated autonomous level data is depicted in Figure 8. As shown in an exemplary embodiment of Figure 8, a road link 800 includes a first road link 802 associated with a first portion of a road segment, a second road link 804 associated with a second portion of a road segment, and a third road link 806 associated with a third portion of a road segment. In an aspect, the road link 802 includes a first map layer that provides a calculated value for Level 2 capabilities that corresponds to 1.0 (e.g., a 100% chance to demonstrate autonomous level capabilities for Level 2 autonomous driving), a second map layer that provides a calculated value for Level 3 capabilities that corresponds to 0.88 (e.g., an 88% chance to demonstrate autonomous level capabilities for Level 3 autonomous driving), a third map layer that provides a calculated value for Level 4 capabilities that corresponds to 0.23 (e.g., a 23% chance to demonstrate autonomous level capabilities for Level 4 autonomous driving), and a fourth map layer that provides a calculated value for Level 5 capabilities that corresponds to 0 (e.g., a 0% chance to demonstrate autonomous level capabilities for Level 5 autonomous driving). The road link 804 includes a first map layer that provides a calculated value for Level 2 capabilities that corresponds to 1.0 (e.g., a 100% chance to demonstrate autonomous level capabilities for Level 2 autonomous driving), a second map layer that provides a calculated value for Level 3 capabilities that corresponds to 0.92 (e.g., an 92% chance to demonstrate autonomous level capabilities for Level 3 autonomous driving), a third map layer that provides a calculated value for Level 4 capabilities that corresponds to 0.31 (e.g., a 31% chance to demonstrate autonomous level capabilities for Level 4 autonomous driving), and a fourth map layer that provides a calculated value for Level 5 capabilities that corresponds to 0 (e.g., a 0% chance to demonstrate autonomous level capabilities for Level 5 autonomous driving). Additionally, the road link 806 includes a first map layer that provides a calculated value for Level 2 capabilities that corresponds to 0.91 (e.g., a 91% chance to demonstrate autonomous level capabilities for Level 2 autonomous driving), a second map layer that provides a calculated value for Level 3 capabilities that corresponds to 0.37 (e.g., a 37% chance to demonstrate autonomous level capabilities for Level 3 autonomous driving), a third map layer that provides a calculated value for Level 4 capabilities that corresponds to 0 (e.g., a 0% chance to demonstrate autonomous level capabilities for Level 4 autonomous driving), and a fourth map layer that provides a calculated value for Level 5 capabilities that corresponds to 0 (e.g., a 0% chance to demonstrate autonomous level capabilities for Level 5 autonomous driving).

In one or more embodiments, the aggregated autonomous level data encoded in the database can be employed by one or more other vehicles to facilitate autonomous driving for the one or more vehicles. In one or more embodiments, one or more notifications can be provided to a display of a vehicle based on the aggregated autonomous level data encoded in the database. For example, in response to a determination that a particular road segment has a high level of reduction of autonomous driving level, then a notification can be generated to advise that other vehicles will be reducing a level of autonomy. In one or more embodiments, a vehicle can employ the aggregated autonomous level data encoded in the database to determine a risk level for autonomous driving by the vehicle. For example, in response to a determination that there are 3 vehicles in proximity with in a road segment and all vehicles are highly capable of driving autonomously, then the road segment may be considered a safer area than if all vehicles detected are more likely to reduce an autonomous driving level. In certain embodiments, an autonomous driving control of a vehicle can determine that the vehicle should pull over and stop on a side of a road in response to a determination that particular aggregated autonomous level data encoded in the database satisfies a defined rationed associated with a defined risk level. In certain embodiments, a recommendation for an infrastructure improvement for a road segment can be generated based on the aggregated autonomous level data encoded in the database.

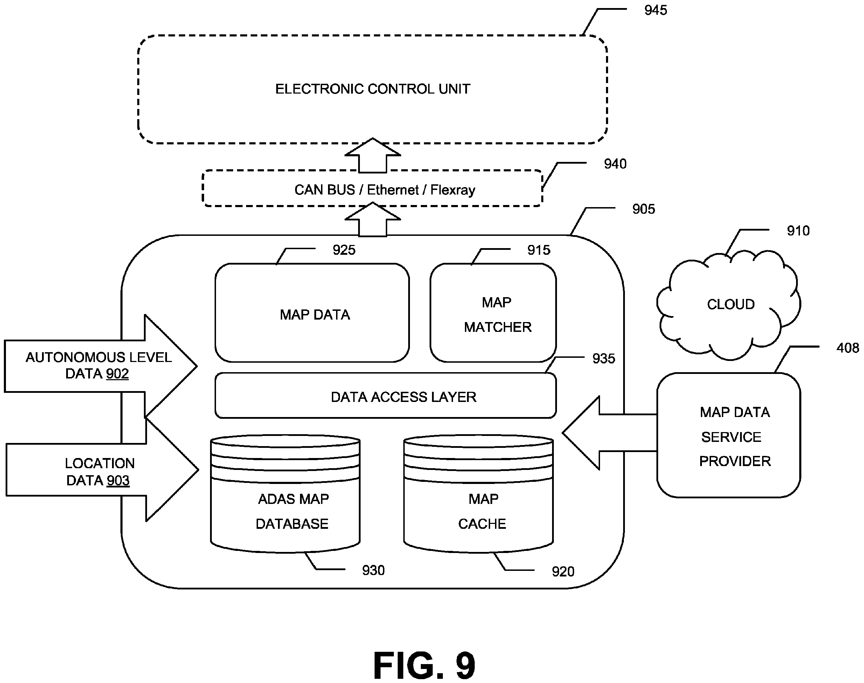

Figure 9 illustrates an example embodiment of an architecture specifically configured for implementing embodiments described herein. The illustrated embodiment of Figure 9 may be vehicle-based, where autonomous level data 902 is obtained from one or more vehicles (e.g., the vehicle 300) traveling along a road segment (e.g., the road segment 302). Additionally or alternatively location data 903 can be obtained from the one or more vehicles using GPS or other localization techniques and correlated to map data of the map data service provider 408. A vehicle with autonomous or semi-autonomous control may establish accurate location and/or improved autonomous driving functionality through the autonomous level data 902 and/or the location data 903 to facilitate the autonomous or semi-autonomous control.

As illustrated in Figure 9, the architecture includes the map data service provider 408 that provides map data 925 (e.g., HD maps and policies associated with road links within the map) to an Advanced Driver Assistance System (ADAS) 905, which may be vehicle-based or server based depending upon the application. The map data service provider 408 may be a cloud-based 910 service. In one or more embodiments, the ADAS 905 receives the location data 903 (e.g., navigation information and/or vehicle position) and may provide the location data 903 to map matcher 915. The map matcher 915 may correlate the vehicle position to a road link on a map of the mapped network of roads stored in the map cache 920. This link or segment, along with the direction of travel, may be used to establish which HD map policies are applicable to the vehicle associated with the ADAS 905, including sensor capability information, autonomous functionality information, etc. Accordingly, policies for the vehicle are established based on the current location and the environmental conditions (e.g., traffic, time of day, weather). The map data 925 associated with the road segment specific to the vehicle are provided to the vehicle control, such as via the CAN (computer area network) BUS (or Ethernet or Flexray) 940 to the electronic control unit (ECU) 945 of the vehicle to implement HD map policies, such as various forms of autonomous or assisted driving, or navigation assistance. In certain embodiments, a data access layer 935 can manage and/or facilitate access to the map cache 920, the map data 925, and/or a map database 930. In an embodiment, at least a portion of the map database 930 can correspond to the map database 104 and/or the map database 410.

By employing an automated driving capability map index for vehicles in accordance with one or more example embodiments of the present disclosure, precision and/or confidence of vehicle localization and/or autonomous driving for a vehicle (e.g., the vehicle 300) can be improved. Furthermore, by employing an automated driving capability map index for vehicles in accordance with one or more example embodiments of the present disclosure, improved navigation of a vehicle can be provided, improved route guidance for a vehicle can be provided, improved semi-autonomous vehicle control can be provided, improved fully autonomous vehicle control can be provided, and/or improved safety of a vehicle can be provided. Moreover, in accordance with one or more example embodiments of the present disclosure, efficiency of an apparatus including the processing circuitry can be improved and/or the number of computing resources employed by processing circuitry can be reduced. In one or more embodiments, by employing an automated driving capability map index for vehicles in accordance with one or more example embodiments of the present disclosure, improved statistical information for a road segment can be provided to provide improved recommendations for infrastructure improvements.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Furthermore, in some embodiments, additional optional operations can be included. Modifications, additions, or amplifications to the operations above can be performed in any order and in any combination.

Moreover, although the foregoing descriptions and the associated drawings describe example embodiments in the context of certain example combinations of elements and/or functions, it should be appreciated that different combinations of elements and/or functions can be provided by alternative embodiments without departing from the scope of the appended claims. In this regard, for example, different combinations of elements and/or functions than those explicitly described above are also contemplated as can be set forth in some of the appended claims. Although specific terms are employed herein, they are used in a generic and descriptive sense only and not for purposes of limitation.

**Claims**

1. A computer-implemented method for generating an automated driving capability map index, the computer-implemented method comprising:

   receiving autonomous level data and location data thereof associated with a vehicle traveling along a road segment, wherein the autonomous level data is identified based on a change in an autonomous level for the vehicle;
   aggregating, based on the location data, the autonomous level data with other autonomous level data for one or more other vehicles associated with the road segment to generate aggregated autonomous level data for the road segment; and
   encoding the aggregated autonomous level data in a database to facilitate an autonomous level prediction for vehicles associated with the road segment.

2. The computer-implemented method of claim 1, wherein the encoding the aggregated autonomous level data in the database comprises mapping the aggregated autonomous level data onto a map data layer of a high-definition map to facilitate the autonomous level prediction for the vehicles.

3. The computer-implemented method of claim 1, wherein the receiving the location data comprises:

   receiving first location data associated with a decision by a processor of the vehicle to initiate the change in the autonomous level for the vehicle; and
   receiving second location data associated with execution of the change in the autonomous level by the processor the vehicle,
   wherein the aggregating the autonomous level data with the other autonomous level data comprises aggregating the autonomous level data with the other autonomous level data based on the first location data and the second location data.

4. The computer-implemented method of claim 3, further comprising:

   receiving first time data associated with the decision to initiate the change in the autonomous level for the vehicle; and
   receiving second time data associated with the execution of the change in the autonomous level for the vehicle,

   wherein the aggregating the autonomous level data with the other autonomous level data comprises aggregating the autonomous level data with the other autonomous level data based on the first time data and the second time data.

5. The computer-implemented method of claim 1, further comprising:

   receiving vehicle version data associated with one or more components of the vehicle that facilitate autonomous driving of the vehicle,
   wherein the aggregating the autonomous level data with the other autonomous level data comprises aggregating the autonomous level data with the other autonomous level data based on the vehicle version data.

6. The computer-implemented method of claim 1, further comprising:

   receiving vehicle data associated with a vehicle type for the vehicle,
   wherein the aggregating the autonomous level data with the other autonomous level data comprises aggregating the autonomous level data with the other autonomous level data based on the vehicle data.

7. The computer-implemented method of claim 1, further comprising:

receiving vehicle context data associated with a reason for the change in the autonomous level for the vehicle, wherein the aggregating the autonomous level data with the other autonomous level data comprises aggregating the autonomous level data with the other autonomous level data based on the vehicle context data.

8. The computer-implemented method of claim 1, further comprising:

determining a transition confidence value for the road segment based on a number of vehicles that are disengaged from a particular autonomous level while traveling along the road segment during an interval of time; and encoding the transition confidence value in the database to facilitate the autonomous level prediction for the vehicles associated with the road segment.

9. The computer-implemented method of claim 8, wherein the determining the transition confidence value for the road segment comprises determining the transition confidence value for the road segment based one or more of:

on temporal data associated with timing for the change in the autonomous level for the vehicle and distance data associated with a distance between the vehicle and a particular location associated with the road segment during the change in the autonomous level for the vehicle.

10. An apparatus configured to generate an automated driving capability map index, the apparatus comprising processing circuitry and at least one memory including computer program code instructions, the computer program code instructions configured to, when executed by the processing circuity, cause the apparatus to:

receive autonomous level data and location data thereof associated with a vehicle traveling along a road segment, wherein the autonomous level data is identified based on a change in an autonomous level for the vehicle; aggregate, based on the location data, the autonomous level data with other autonomous level data for one or more other vehicles associated with the road segment to generate aggregated autonomous level data for the road segment; and encode the aggregated autonomous level data in a database to facilitate an autonomous level prediction for vehicles associated with the road segment.

11. An apparatus configured to generate an automated driving capability map index, the apparatus comprising processing circuitry and at least one memory including computer program code instructions, the computer program code instructions configured to, when executed by the processing circuity, cause the apparatus to:

receive autonomous level data and location data thereof associated with a vehicle traveling along a road segment, wherein the autonomous level data is associated with a transition of an autonomous level for the vehicle with respect to the road segment; generate a data point for a map layer associated with the road segment based on the autonomous level data and the location data, wherein the data point indicates the transition of the autonomous level for the vehicle and a location associated with the transition of the autonomous level for the vehicle; and store the data point in a database associated with the map layer, wherein the map layer comprises the data point and one or more other data points that indicate one or more other locations related to respective autonomous level transitions for one or more other vehicles associated with the road segment.

12. The apparatus of claim 11, wherein the autonomous level data comprises an indication of a particular autonomous level for the vehicle after the transition.

13. The apparatus of claim 11, wherein the autonomous level data comprises a first indication of a first autonomous level for the vehicle prior to the transition and a second indication of a second autonomous level for the vehicle after the transition.

14. The apparatus of claim 11, wherein the autonomous level data comprises an indication of an increase or a decrease in the autonomous level for the vehicle after the transition.

**15.** The apparatus of claim 11, wherein the computer program code instructions are further configured to, when executed by the processing circuitry, cause the apparatus to:

aggregate the data point with another data point of the map layer in response to a determination that a distance between the data point and the other data point satisfies a defined criterion.

APPARATUS **102**

PROCESSING CIRCUITRY **106**

MEMORY **108**

COMMUNICATION INTERFACE **110**

SENSOR(S) **112**

MAP DATABASE **104**

100

EP 3 961 154 A1

**FIG. 1**

200

RECEIVE AUTONOMOUS LEVEL DATA AND LOCATION DATA THEREOF ASSOCIATED WITH A VEHICLE TRAVELING ALONG A ROAD SEGMENT, WHERE THE AUTONOMOUS LEVEL DATA IS IDENTIFIED BASED ON A CHANGE IN AN AUTONOMOUS LEVEL FOR THE VEHICLE
202

AGGREGATE, BASED ON THE LOCATION DATA, THE AUTONOMOUS LEVEL DATA WITH OTHER AUTONOMOUS LEVEL DATA FOR ONE OR MORE OTHER VEHICLES ASSOCIATED WITH THE ROAD SEGMENT TO GENERATE AGGREGATED AUTONOMOUS LEVEL DATA FOR THE ROAD SEGMENT
204

ENCODE THE AGGREGATED AUTONOMOUS LEVEL DATA IN A DATABASE TO FACILITATE AN AUTONOMOUS LEVEL PREDICTION FOR VEHICLES ASSOCIATED WITH THE ROAD SEGMENT
206

# FIG. 2

302

VEHICLE
300

VEHICLE
300

TIME A

TIME B

# FIG. 3

400

408

MAP DATA SERVICE PROVIDER

410

402

MAP
DATABASE

PROCESSING
SERVER

404

MOBILE DEVICE

412

NETWORK

# FIG. 4

| VEHICLE MAKE/ MODEL 502 | PREVIOUS AUTONOMOUS LEVEL 504 | CURRENT AUTONOMOUS LEVEL 506 | DECISION LOCATION 508 | DECISION TIME 510 | EXECUTION LOCATION 512 | EXECUTION TIME 514 | VERSION INFO 516 | REASON 518 |
|---|---|---|---|---|---|---|---|---|
| VEHICLE_A | 3 | 2 | 41.894171, 87.655527 | 23:51:32, 09-20-2021 | 41.894171, 87.695867 | 23:54:32, 09-20-2021 | 23.5.43.179 | DRIVE STRATEGY |
| VEHICLE_B | 2 | 3 | 44.845171, 89.652347 | 14:51:32, 09-28-2021 | 44.845171, 89.652347 | 14:51:32, 09-28-2021 | 23.5.43.179 | USER TRIGGERED |
| VEHICLE_C | 3 | 4 | 39.894171, 82.655527 | 13:51:32, 10-20-2021 | 39.823324, 82.795837 | 13:54:32, 10-20-2021 | 23.5.43.179 | DRIVE STRATEGY |

**FIG. 5**

EP 3 961 154 A1

_600_

```
DBSCAN(DB, distFunc, eps, minPts) {    C = 0                                                /* disengaged region counter */
for each disengaged point P in the disengagement database DB {
    if label(P) ≠ undefined then continue            /* Previously processed in inner loop */  Neighbors N = RangeQuery(DB, distFunc, P, eps)    /*Find other
disengaged vehicles*/
    if |N| < minPts then {                           /* minimum number of vehicle check */
            label(P) = Noise                                 /* Label disengaged point as Noise - outlier */
      continue  }
    C = C + 1                                        /* next cluster label */
    label(P) = C                                     /* Label initial disengaged point */
    Seed set S = N \ {P}                             /* Neighbors of disengaged vehicles to expand */
            for each point Q in S {                          /* Process every seed point */
      if label(Q) = Noise then label(Q) = C          /* Change Noise to border point */
      if label(Q) ≠ undefined then continue          /* Previously processed */
            label(Q) = C                                     /* Label neighboring disengaged vehicle */
            Neighbors N = RangeQuery(DB, distFunc, Q, eps) /* Find neighbors */
            if |N| ≥ minPts then {                           /* minimum number of vehicle check */
                    S = S ∪ N                                       /* Add new disengaged vehicles to seed set */
      }
  }
}
}
```

# FIG. 6

700

702

FIG. 7

ROAD LINK 804
L5=0
L4=0.31
L3=0.92
L2=1.0

ROAD LINK 806
L5=0
L4=0
L3=0.37
L2=0.91

ROAD LINK 802
L5=0
L4=0.23
L3=0.88
L2=1.0

800

FIG. 8

EP 3 961 154 A1

**FIG. 9**

EP 3 961 154 A1

Europäisches
Patentamt

European
Patent Office

Office européen
des brevets

# EUROPEAN SEARCH REPORT

**Application Number**

**EP 21 19 2183**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/309833 A1 (FERGUSON DAVID I [US] ET AL) 16 October 2014 (2014-10-16) | 1,2,5-7, 10-14 | INV. G01C21/00 |
| A | * paragraphs [0023], [0067], [0069] * | 3,4,8,9, 15 | |
| | ----- | | |
| A | US 2020/057451 A1 (ROBERT EMMANUEL [FR] ET AL) 20 February 2020 (2020-02-20) | 1-15 | |
| | * paragraphs [0022], [0032] * | | |
| | ----- | | |

**TECHNICAL FIELDS SEARCHED (IPC)**

**G01C**

The present search report has been drawn up for all claims

| Place of search | Date of completion of the search | Examiner |
|---|---|---|
| **The Hague** | **17 January 2022** | **Kuhn, Robert** |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   ........................................................................
& : member of the same patent family, corresponding
   document

EPO FORM 1503 03.82 (P04C01)

## EP 3 961 154 A1

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2022

| Patent document cited in search report | | | Publication date | Patent family member(s) | | | Publication date |
|---|---|---|---|---|---|---|---|
| US 2014309833 | A1 | | 16-10-2014 | CN | 105210128 | A | 30-12-2015 |
| | | | | CN | 107976200 | A | 01-05-2018 |
| | | | | EP | 2984642 | A1 | 17-02-2016 |
| | | | | EP | 3757965 | A1 | 30-12-2020 |
| | | | | JP | 6178914 | B2 | 09-08-2017 |
| | | | | JP | 6369789 | B2 | 08-08-2018 |
| | | | | JP | 6677765 | B2 | 08-04-2020 |
| | | | | JP | 2016520902 | A | 14-07-2016 |
| | | | | JP | 2017191617 | A | 19-10-2017 |
| | | | | JP | 2018154338 | A | 04-10-2018 |
| | | | | KR | 20150138394 | A | 09-12-2015 |
| | | | | US | 2014309833 | A1 | 16-10-2014 |
| | | | | US | 2015355640 | A1 | 10-12-2015 |
| | | | | US | 2017176996 | A1 | 22-06-2017 |
| | | | | US | 2019258261 | A1 | 22-08-2019 |
| | | | | WO | 2014168944 | A1 | 16-10-2014 |
| US 2020057451 | A1 | | 20-02-2020 | CN | 110114635 | A | 09-08-2019 |
| | | | | EP | 3535546 | A1 | 11-09-2019 |
| | | | | FR | 3058214 | A1 | 04-05-2018 |
| | | | | US | 2020057451 | A1 | 20-02-2020 |
| | | | | WO | 2018083200 | A1 | 11-05-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63071197